# EUROPEAN PATENT APPLICATION

(11) **EP 4 730 453 A1**
(43) Date of publication of application: **22.04.2026**
(21) Application number: 23943483.0
(22) Date of filing: 26.12.2023
(51) Int. Cl.: H01M 10/04

(54) **BATTERY PRODUCTION DEVICE, BATTERY PRODUCTION APPARATUS, AND BATTERY PRODUCTION METHOD**

(30) Priority: 27.06.2023 CN 202310766338
(71) Applicant: Contemporary Amperex Technology Co., Limited, Ningde, Fujian 352100 (CN)
(72) Inventor: WU, Kai, Ningde, Fujian 352100 (CN); WANG, Hongda, Ningde, Fujian 352100 (CN); ZHANG, Lizhu, Ningde, Fujian 352100 (CN); TANG, Linglong, Ningde, Fujian 352100 (CN); CHEN, Xu, Ningde, Fujian 352100 (CN); FAN, Xiang, Ningde, Fujian 352100 (CN); ZHENG, Zhijian, Ningde, Fujian 352100 (CN)
(74) Representative: Gong, Jinping
(86) International application number: PCT/CN2023/142135
(87) International publication number: WO 2025/001012

(57) **Abstract**

Disclosed in the present application are a battery production device, a battery production apparatus, and a battery production method. The battery production device includes a frame, a moving mechanism, and a cover body. The moving mechanism is connected to the frame, has a first station, and is used for moving a first support cup to the first station, the first support cup having a first mounting cavity configured to receive a battery therein; and the cover body is used for sealing and covering the first support cup located at the first station, so as to seal the first mounting cavity. The moving mechanism does not need to take the battery out from the support cup, such that the movement actions of a mechanism are reduced, and the operation actions are simplified, which is beneficial to increasing the production efficiency of the battery and is then beneficial to meeting the high-speed manufacturing requirement of the battery.

## Description

The present application claims priority to Chinese Patent Application No. 202310766338.7, filed with the China National Intellectual Property Administration on June 27, 2023, entitled "Battery production device, battery production apparatus, and battery production method", the entire content of which is incorporated herein by reference.

### TECHNICAL FIELD

The present application relates to the technical field of battery production, and in particular, to a battery production device, a battery production apparatus, and a battery production method.

### BACKGROUND

Batteries are widely used in electronic devices, such as mobile phones, notebook computers, electric bicycles, electric vehicles, electric airplanes, electric ships, electric toy cars, electric toy ships, electric toy airplanes, electric tools, and the like.

In some manufacturing steps of the battery, the battery needs to be placed in a closed environment for manufacturing, for example, in processes such as drying and leakage detection of the battery, but there are many complicated operations of moving the battery to the closed environment, which is difficult to meet the high-speed manufacturing requirements of the battery.

The above statement merely provides the background information related to the present application and does not necessarily constitute the prior art.

### SUMMARY

An objective of embodiments of the present application is to provide a battery production device, a battery production apparatus, and a battery production method, including. but not limited to, solving the problem in the related art that there are many complicated operations of moving the battery to the closed environment, which is difficult to meet the high-speed manufacturing requirements of the battery.

An embodiment of the present application adopts the technical solutions below:

In a first aspect, a battery production device is provided. The battery production device includes a frame, a moving mechanism, and a cover body, where the moving mechanism is connected to the frame, has a first station, and is used for moving a first support cup to the first station, the first support cup having a first mounting cavity configured to receive a battery therein; and the cover is used for sealing and covering the first support cup located at the first station, so as to seal the first mounting cavity.

In the battery production device in the embodiment of the present application, the moving mechanism directly moves the first support cup loaded with the battery to the first station, and then the cover body seals and covers the first support cup located at the first station, so as to seal the first mounting cavity of the first support cup, and thus the battery is placed in the sealed first mounting cavity, and in this process, the moving mechanism does not need to take the battery out of the support cup, which reduces the movement of the mechanism, simplifies the operating action, is beneficial to increasing the production efficiency of the battery, and is then beneficial to meeting the high-speed manufacturing requirements of the battery.

In an embodiment, the battery production device further includes a sealing member, and the cover body is hermetically connected to the first support cup by the sealing member.

By adopting the technical solution of this embodiment, the sealing member may seal a joint between the cover body and the first support cup, thereby reducing the risk of leakage of the first mounting cavity and improving the sealing performance of the first mounting cavity.

In an embodiment, the sealing member includes at least one of a sealing ring and a sealant.

By adopting the technical solution of this embodiment, the sealing member may be flexibly selected and arranged, which facilitates processing and manufacturing.

In an embodiment, the cover body is provided with a second mounting cavity, and in a case that the cover body covers the first support cup, the first mounting cavity is communicated with the second mounting cavity and forms a closed space configured to receive the battery therein.

By adopting the technical solution of this embodiment, in the process of sealing and closing the first support cup with the cover body, a cavity wall of the first mounting cavity may be in contact with the battery, thereby guiding the cover body to stably seal and close the first support cup, which is beneficial to improving the success rate of closing the cover body.

In an embodiment, the cover body includes a plate portion and a wall portion that are connected to each other, the wall portion is annularly disposed around the plate portion, the wall portion and the plate portion enclose to form the second mounting cavity, and an end of the wall portion facing away from the plate portion is used for sealing and covering the first support cup.

By adopting the technical solution of this embodiment, the cover body is in a structural form of the plate portion and the wall portion, which is simple in structure and convenient to process and manufacture.

In an embodiment, an avoidance groove for avoiding a welded seam at a bottom of the battery is configured in a cavity bottom wall of the first mounting cavity.

By adopting the technical solution of this embodiment, when the battery is placed in the first mounting cavity of the first support cup, the avoidance groove can provide a receiving space for a welded seam at the bottom of the battery, thereby reducing the risk that the welded seam at the bottom of the battery is in contact with the first support cup and reducing the risk that the battery is damaged.

In an embodiment, a support protrusion for supporting the battery is configured at the cavity bottom wall of the first mounting cavity, and the avoidance groove is formed between a side wall surface of the support protrusion proximal to a peripheral wall of the mounting cavity and the peripheral wall of the mounting cavity.

By adopting the technical solution of this embodiment, the support protrusion is configured on the cavity bottom wall of the first mounting cavity, so that the avoidance groove may be formed, which has a simple structure and is convenient to process and manufacture.

In an embodiment, the support protrusion includes an annular protrusion, the annular protrusion encloses to form an inner hole, the avoidance groove is formed between an outer peripheral wall of the annular protrusion and the peripheral wall of the first mounting cavity, and the annular protrusion is provided with a communication structure for communicating the avoidance groove with the inner hole.

By adopting the technical solution of this embodiment, in a case where the battery is placed on the annular protrusion, the inner hole may pass through the communication structure and the avoidance groove, so that in an actual leakage detection process, a detection gas leaked from a leakage point at the bottom of the battery will enter the avoidance groove through the communication structure, and then enter the first mounting cavity from the avoidance groove, so as to be detected by the leakage detection mechanism. Thus, whether there is a leakage point at the bottom of the battery may be detected, which is beneficial to reducing the dead angle of leakage detection and improving the accuracy of detection.

In one embodiment, the cover body is movable toward the first station, so that the cover body seals and covers the first support cup located at the first station.

By adopting the technical solution of this embodiment, the cover body may close and cover the first support cup located at the first station by moving the cover body.

In an embodiment, the moving mechanism includes a first conveying member, a support platform, and a first pushing member that are connected to the frame, the first conveying member is used for conveying the first support cup, the support platform is disposed on one side of the first conveying member, the support platform is located at the first station, the first pushing member is capable of pushing the first support cup located on the first conveying member to move along a first direction, and the first direction is a direction from the first conveying member to the support platform.

By adopting the technical solution of this embodiment, the first conveying member supports the first support cup loaded with the battery at a support platform, then the first pushing member pushes the first support cup on the first conveying member to the support platform along the first direction, and then the cover body seals and covers the first support cup, where the battery may be moved from the first conveying member to the support platform by the first pushing member, the movement action of the battery is simple and the production efficiency is high; in addition, the movement action is simple, the debugging thereof is simple, the debugging efficiency is high, which is more beneficial to improving the production efficiency, and the structure of the overall device is simple; moreover, a plurality of first support cups may be simultaneously pushed to move by the first pushing member, which is beneficial to reducing the manufacturing cost.

In one embodiment, a side portion of the first pushing member facing the support platform is provided with a first engaging groove for engaging with a peripheral wall of the first support cup.

By adopting the technical solution of this embodiment, in the process of pushing the first support cup to move by the first pushing member, the first support cup is engaged in the first engaging groove, and the first support cup is limited by the first engaging groove, and may move stably and reliably with the first pushing member, and then move to the support platform more stably.

In an embodiment, the support platform is provided with a support surface for supporting the battery, the moving mechanism further includes a limiting member, and the limiting member is used for protruding from the support surface, so that a region of the support surface located between the limiting member and the first conveying member forms an accommodating region configured to accommodate the first support cup.

By adopting the technical solution of this embodiment, in a case where the limiting member protrudes from the support surface, after the first pushing member pushes the first support cup to move the accommodating region, the first support cup may abut against the side of the limiting member facing the first conveying member, so that the first support cup may be positioned on the support platform may be realized, which is beneficial for the cover body to accurately seal and cover the first support cup.

In one embodiment, a second engaging groove is formed in a side portion of the limiting member facing the first conveying member, and the second engaging groove is used for engaging with the peripheral wall of the first support cup.

By adopting the technical solution of this embodiment, after the first support cup is engaged in the second engaging groove, the first support cup is limited by the second engaging groove, and the first support cup may be accurately positioned on the support platform, so that the cover body can be seal and cover the first support cup more accurately in the subsequent process.

In an embodiment, the limiting member includes a limiting protrusion protruding from the support surface, and/or the limiting member includes a limiting portion, and the limiting portion is movable relative to the support platform to protrude from the support surface.

By adopting the technical solution of this embodiment, the structure of the limiting member may be flexibly arranged, which facilitates processing and manufacturing.

In an embodiment, the support platform is provided with a support surface for supporting the battery and a positioning member capable of protruding from the support surface, and a positioning hole where the positioning member is inserted is formed in a bottom of the first support cup.

By adopting the technical solution of this embodiment, after the first support cup is pushed onto the support platform by the first pushing member, the positioning member is inserted into the positioning hole, thereby limiting the movement of the first support cup and realizing the accurate positioning of the first support cup, so that the subsequent cover body can accurately seal and cover the first support cup.

In an embodiment, the positioning member includes a positioning protrusion protruding from the support surface, and/or the positioning member includes a positioning portion, the support platform is provided with a through hole penetrating the support surface, and the positioning portion is used for moving in the through hole to protrude from the support surface.

By adopting the technical solution of this embodiment, the structure of the positioning member may be flexibly arranged, which facilitates processing and manufacturing.

In an embodiment, a wear-resistant layer is disposed on an inner wall of the positioning hole.

By adopting the technical solution of this embodiment, the arrangement of the wear-resistant layer may reduce the wear of the positioning hole and prolong the service life.

In an embodiment, the support platform is movable toward the cover body, so that the cover body seals and covers the first support cup located on the support platform.

By adopting the technical solution of this embodiment, the support platform moves toward the cover body, which is easy to implement, simple in structure, and convenient to process and manufacture.

In an embodiment, the moving mechanism further includes a first blocking member, the first blocking member is movable between the support platform and the first conveying member to block the first support cup, and/or the moving mechanism further includes a second blocking member, and the second blocking member is movable to a side of the first conveying member facing away from the support platform to block the first pushing member.

By adopting the technical solution of this embodiment, the feeding of the support platform is more stable and smoother, which is beneficial to reducing the error rate.

In an embodiment, the first conveying member is configured with a receiving region configured to receive the first support cup, and the receiving region and the support platform are distributed along the first direction; and the moving mechanism further includes a third blocking member for blocking the first support cup from flowing into the receiving region, and/or the moving mechanism further includes a fourth blocking member for blocking the first support cup from flowing out of the receiving region.

By adopting the technical solution of this embodiment, the first pushing member can stably push the first support cup in the receiving region to the support platform.

In an embodiment, the moving mechanism further includes a second pushing member, the second pushing member is capable of pushing the first support cup located on the support platform to move along a second direction, and the second direction is from the support platform to the first conveying member.

By adopting the technical solution of this embodiment, after the cover body is separated from the first support cup, the second pushing member may push the first support cup of the support platform to the first conveying member, and the first conveying member moves the first support cup to the subsequent process, so that the actions that the first support cup enters the moving mechanism and moves out of the moving mechanism are both completed by the first conveying member, and the entire device is good in structural compactness and convenient to process and manufacture.

In an embodiment, the moving mechanism further includes a second conveying member and a first detection mechanism for detecting the battery, the second conveying member is located on one side of the first conveying member facing away from the support platform, and the second pushing member is capable of pushing the first support cup located on the support platform to the first conveying member or the second conveying member according to a detection result of the first detection mechanism.

By adopting the technical solution of this embodiment, after the cover body is separated from the first support cup, the second pushing member may push the first support cup of the support platform to the second conveying member or the first conveying member according to a detection result of the first detection mechanism, and the batteries are sorted by the first conveying member and the second conveying member, so as to facilitate subsequent operations.

In an embodiment, the moving mechanism further includes a third conveying member, and the third conveying member is located on one side of the support platform facing away from the first conveying member.

By adopting the technical solution of this embodiment, the actions that the first support cup enters the first conveying member and the third conveying member are both completed by the first pushing member, and the entire device is simple in structure and good in structural compactness, and convenient to manufacture.

In an embodiment, the moving mechanism further includes a fourth conveying member and a second detection mechanism for detecting the battery, the fourth conveying member is located on one side of the third conveying member facing away from the support platform, and the first pushing member is capable of pushing the first support cup located on the support platform to the third conveying member or the fourth conveying member according to a detection result of the second detection mechanism.

By adopting the technical solution of this embodiment, after the cover body is separated from the first support cup, the first pushing member may push the first support cup of the support platform to the third conveying member or the fourth conveying member according to a detection result of the second detection mechanism, and the batteries are sorted by the third conveying member and the fourth conveying member, so as to facilitate subsequent operations.

In an embodiment, the battery production device further includes a leakage detection mechanism for detecting a leakage of the battery.

By adopting the technical solution of this embodiment, after the first mounting cavity is sealed, the battery may be subjected to a leakage detection test through the leakage detection mechanism.

In an embodiment, the leakage detection mechanism includes a vacuumizing component, a gas charging component, and a detection component, a vacuuming port of the vacuumizing component is communicated with the first mounting cavity, the gas charging component is used for charging the battery with a detection gas, and a detection port of the detection component is communicated with the first mounting cavity, so as to detect whether the detection gas exists in the first mounting cavity.

By adopting the technical solution of this embodiment, after the first mounting cavity is sealed, the vacuumizing component vacuumizes the first mounting cavity, and the gas charging component charges the detection gas into the battery; in a case that there is a leakage point in the battery, the detection gas flows into the first mounting cavity from the leakage point, and the detection component detects that there is the detection gas in the first mounting cavity, thereby determining that there is the leakage point in the battery and the battery is unqualified; and in a case that there is no leakage point in the battery, the detection gas does not leaked into the first mounting cavity, and the detection component does not detect the detection gas, thereby determining that there is no leakage point in the battery and the battery is qualified, thus, realizing leakage detection of the battery.

In an embodiment, a heating mechanism for heating the battery is disposed in at least one of the cover body and the first support cup.

By adopting the technical solution of this embodiment, the heating mechanism may heat the battery, so as to dry the battery, and in addition, the heating mechanism may be flexibly arranged, which facilitates processing and manufacturing.

In a second aspect, a battery production apparatus is provided, including a first battery production device and a second battery production device, where the first battery production device includes the battery production device in the above embodiment, and the second battery production device includes the battery production device in the above embodiment; the fourth conveying member of the first battery production device is connected to the first conveying member of the second battery production device, so that the first support cup located on the fourth conveying member of the first battery production device is capable of being conveyed to the first conveying member of the second battery production device; and the third conveying member of the first battery production device is connected to the second conveying member of the second battery production device, so that the first support cup located on the second conveying member of the second battery production device is capable of being conveyed to the third conveying member of the first battery production device.

Through the technical solution of this embodiment, the design of the first battery production device and the second battery production device may realize battery sorting and re-detection of the sorting result, thereby improving the accuracy of battery sorting.

In an embodiment, the battery production apparatus includes a plurality of first battery production devices arranged in sequence, and the first conveying members of the first battery production devices are connected in sequence; the third conveying members of the first battery production devices are connected in sequence, and the fourth conveying members of the first battery production devices are connected in sequence; the last fourth conveying member is connected to the first conveying member of the second battery production device; and the last third conveying member is connected to the second conveying member of the second battery production device.

By adopting the technical solution of this embodiment, the production requirements of a plurality of batteries may be met, and the plurality of first battery production devices are arranged in sequence and connected, so that the entire battery production apparatus is simple in structure and easy to manufacture, which is also beneficial to reducing the manufacturing cost and improving the production efficiency.

In an embodiment, the battery production apparatus further includes a buffer mechanism, and the buffer mechanism is used for buffering the battery conveyed by the first conveying member of the second battery production device.

By adopting the technical solution of this embodiment, the batteries conveyed by the first conveying member of the second battery production device are buffered in a centralized manner by the buffer mechanism, so as to facilitate subsequent centralized removal.

In a third aspect, a battery production method is provided, and the battery production method includes:
battery loading: placing a battery in a first mounting cavity of a first support cup;
battery moving: moving, by a moving mechanism of a battery production device, the first support cup to a first station; and
first mounting cavity sealing: covering the first support cup with a cover body of the battery production device, so as to seal the first mounting cavity.

In the battery production method in the embodiment of the present application, the battery is first placed in the first mounting cavity of the first support cup, then the first support cup is moved to the first station by the movement of the battery production device, and finally, the cover body of the battery production device seals and covers the first support cup, so as to seal the first mounting cavity, and thus the battery is placed in the sealed first mounting cavity, that is, the battery is in the closed space; and in the battery production method, the moving mechanism does not need to take the battery out of the support cup, which reduces the movement of the mechanism, simplifies the operating action, is beneficial to increasing the production efficiency of the battery, and is then beneficial to meeting the high-speed manufacturing requirements of the battery.

In an embodiment, before the battery is loaded, the battery is placed in a second cup, and a first cup changing device moves the battery located in the second cup to the first mounting cavity of the first support cup, and/or, after the first mounting cavity is sealed, the cover body is separated from the first support cup, and the second cup changing device moves the battery located in the first support cup to the third support cup.

By adopting the technical solution of this embodiment, most of the production process requirements in the battery production process can be better met through the cup changing action, which is beneficial to improving the production efficiency of the battery.

In an embodiment, the moving mechanism includes a first conveying member, a support platform, and a first pushing member, and the battery moving specifically includes: conveying, by the first conveying member, the first support cup loaded with the battery to the support platform, and pushing, by the first pushing member, the first support cup to the support platform.

By adopting the technical solution of this embodiment, the first conveying member supports the first support cup loaded with the battery at a support platform, then the first pushing member pushes the first support cup on the first conveying member to the support platform, and then the cover body seals and covers the first support cup, where the battery may be moved from the first conveying member to the support platform by the first pushing member, the movement action of the battery is simple and the production efficiency is high; in addition, the movement action is simple, the debugging is simple and the debugging efficiency is high, and the structure of the entire device is simple, which is more beneficial to improving the production efficiency; moreover, a plurality of first support cups may be simultaneously pushed to move by the first pushing member, which is beneficial to reducing the manufacturing cost.

In an embodiment, the moving mechanism further includes a second pushing member, a second conveying member, and a first detecting mechanism, where the first detecting mechanism detects the battery in the first support cup after the cover body closes the first support cup; when the first detecting mechanism detects that the battery in the first support cup is qualified, the second pushing member pushes the first support cup located on the support platform to the second conveying member after the cover body is separated from the first support cup; and when the first detecting mechanism detects that the battery in the first support cup is unqualified, the second pushing member pushes the first support cup located on the support platform to the first conveying member after the cover body is separated from the first support cup.

By adopting the technical solution of this embodiment, after the cover body is separated from the first support cup, the second pushing member may push the first support cup of the support platform to the second conveying member or the first conveying member according to a detection result of the first detection mechanism, and the qualified and unqualified batteries are sorted by the first conveying member and the second conveying member, so as to facilitate subsequent operations.

In an embodiment, the moving mechanism further includes a third pushing member, a fourth conveying member, and a second detecting mechanism, where the second detecting mechanism detects the battery in the first support cup after the cover body closes the first support cup; when the second detecting mechanism detects that the battery in the first support cup is qualified, the first pushing member is used for pushing the first support cup located on the support platform to the third conveying member after the cover body is separated from the first support cup; and when the second detecting mechanism detects that the battery in the first support cup is unqualified, the first pushing member is used for pushing the first support cup located on the support platform to the fourth conveying member after the cover body is separated from the first support cup.

By adopting the technical solution of this embodiment, after the cover body is separated from the first support cup, the first pushing member may push the first support cup of the support platform to the third conveying member or the fourth conveying member according to a detection result of the second detection mechanism, and the qualified and unqualified batteries are sorted by the third conveying member and the fourth conveying member, so as to facilitate subsequent operations.

In an embodiment, the battery production device includes a first battery production device and a second battery production device; the battery specifically includes: moving a first support cup of the first battery production device to a first station by a moving mechanism of the first battery production device; and the first mounting cavity sealing specifically includes: covering the first support cup of the first battery production device with the cover body of the first battery production device to seal the first mounting cavity of the first support cup of the first battery production device; and after the first mounting cavity is sealed, detecting, by the first battery production device, the battery loaded in the first support cup of the first battery production device, where in a case that the first battery production device detects that the battery is qualified, after the cover body of the first battery production device is separated from the first support cup of the first battery production device, the first battery production device outputs the first support cup of the first battery production device to an discharging conveying member; and in a case that the first battery production device detects that the battery is unqualified, after the cover body of the first battery production device is separated from the first support cup of the first battery production device, the first battery production device conveys the first support cup of the first battery production device to the second battery production device; and re-detecting, by the second battery production device, the battery in the first support cup conveyed by the first battery production device, where in a case that the second battery production device detects that the battery is qualified, the second battery production device conveys the first support cup into the first battery production device and conveys the first support cup to the discharging conveying member via the first battery production device; and in a case that the second battery production device detects that the battery is unqualified, the second battery production device conveys the first support cup to a defective product conveying member.

By adopting the technical solution of this embodiment, after the first battery production device detects the battery, the second battery production device performs re-detection for the unqualified battery, which is beneficial to improving the detection accuracy of the battery.

### DESCRIPTION OF DRAWINGS

To describe technical solutions in embodiments of the present application more clearly, the following briefly describes the accompanying drawings for describing the embodiments or the conventional technology. It is clear that the accompanying drawings described in the following are merely embodiments of the present application. Those of ordinary skill in the art can still derive other figures from these figures without creative labor.
FIG. 1 is a schematic structural diagram of a battery production device provided in an embodiment of the present application from one perspective.
FIG. 2 is an exploded schematic diagram of the battery production device shown in FIG. 1.
FIG. 3 is a schematic structural diagram of a leakage detection mechanism and a cover body shown in FIG. 2.
FIG. 4 is a schematic structural diagram of a first support cup shown in FIG. 2 from one perspective.
FIG. 5 is a schematic structural diagram of a first support cup shown in FIG. 2 from another perspective.
FIG. 6 is a schematic structural diagram of the battery production device shown in FIG. 1 from another perspective.
FIG. 7 is a sectional view of a battery production device provided in another embodiment of the present application.
FIG. 8 is a sectional view of a battery production device provided in yet another embodiment of the present application.
FIG. 9 is a schematic structural diagram of a bearing platform in the battery production device provided in yet another embodiment of the present application in a to-be-loaded state.
FIG. 10 is a schematic structural diagram of the bearing platform in the battery production device shown in FIG. 9 after charging.
FIG. 11 is a schematic structural diagram of a first conveying member, a third blocking member, and a fourth blocking member in the battery production device provided in yet another embodiment of the present application.
FIG. 12 is a schematic structural diagram of a battery production device provided in yet another embodiment of the present application.
FIG. 13 is a schematic structural diagram of a battery production device provided in yet another embodiment of the present application.
FIG. 14 is a schematic structural diagram of a battery production apparatus provided in yet another embodiment of the present application.

In which, reference signs in the figures:
100, battery production apparatus; 10, battery production device; 110, frame; 120, moving mechanism; 1201, first station; 121 first conveying member; 1211, receiving region; 122, support platform; 1221 support surface; 1222, accommodating region; 1223, through hole; 123, first pushing member; 1231, first engaging groove; 124, limiting member; 1241, second engaging groove; 1242, limiting protrusion; 1243, limiting portion, 125, positioning member; 1251, positioning protrusion; 1252, positioning portion; 126, first blocking member; 127 second blocking member; 128, third blocking member; 129, fourth blocking member; 130, second pushing member; 1301, third engaging groove; 131, second conveying member; 132, first detection mechanism; 134, third conveying member; 135, fourth conveying member; 136, second detection mechanism; 137, leakage detection mechanism; 1371, vacuumizing component; 1372, gas charging component; 13721, gas charging nozzle; 138, first driving member; 139, second driving member; 140, third driving member; 141, ninth driving member; 142, first slide rail; 143, second slide rail; 144, third slide rail; 150, cover body; 151, second mounting cavity; 152, plate portion; 153, wall portion; 160, sealing member; 20, first support cup; 21, first mounting cavity; 22, positioning hole; 23, wear-resistant layer; 24, avoidance groove; 25, support protrusion; 26, communication structure; 27, inner hole; 31, first battery production device; 32, second battery production device; 40, buffer mechanism; 50, charging conveying member; 51, main conveying member; 52, branch conveying member; 60, discharging conveying member; 70, defective product conveying member; 200, battery.

### DESCRIPTION OF EMBODIMENTS

The embodiments of the present application will be described in detail below. The examples of the embodiments are shown in the accompanying drawings, in which the same or similar reference numerals denote the same or similar elements or elements with the same or similar functions throughout. The embodiments described below with reference to the drawings are exemplary and are intended to explain the present application, and should not be construed as limiting the present application.

In the description of the present application, it should be understood that the orientation or positional relationship indicated by the terms such as "length", "width", "upper", "lower", "front", "rear", "left", "right", "vertical", "horizontal", "top", "bottom", "inner" and "outer" is based on the orientation or positional relationship shown in the drawings, only to facilitate the description of the present application and simplify the description, rather than to indicate or imply that the referred device or element must have a specific orientation, be constructed and operated in a specific orientation, and therefore cannot be understood as a limitation to the present application.

In addition, the terms "first" and "second" are only used for descriptive purposes, and should not be construed as indicating or implying relative importance or implicitly indicating the number of technical features indicated. Thus, a feature defined by "first" and "second" may explicitly or implicitly indicates that the feature is singular or plural. In the description of the present application, the meaning of "a plurality of" is two or more, unless otherwise specifically defined.

In the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person skilled in the art can understand specific meanings of these terms in the present application according to specific situations.

In the description of the present application, it should be noted that the term "and/or" merely describes an association relationship of associated objects, indicating that three relationships may exist, for example, A and/or B may mean that A exists alone, A and B exist simultaneously, or B exists alone.

It should also be noted that, in the embodiments of the present application, the same components or the same parts are denoted by the same reference signs, for the same parts in the embodiments of the present application, only one of the parts or components may be denoted by the reference signs in the drawings, and it should be understood that the same reference signs apply to the other same parts or components.

In the present application, the terms "one embodiment", "some embodiments", "examples", "specific examples", or "some examples" and the like mean that specific features, structures, materials, or characteristics described in conjunction with the embodiment or example are included in at least one embodiment or example of the present application. In this specification, the schematic representations of the above terms are not necessarily directed to the same embodiment or example. Moreover, the described specific features, structures, materials, or characteristics may be combined in a suitable manner in any one or more embodiments or examples. In addition, those skilled in the art can incorporate and combine the different embodiments or examples described in this specification and the features of different embodiments or examples without conflicting with each other.

Batteries are widely used in electronic devices, such as mobile phones, notebook computers, electric bicycles, electric vehicles, electric airplanes, electric ships, electric toy cars, electric toy ships, electric toy airplanes, electric tools, and the like.

In some manufacturing steps of the battery, the battery needs to be placed in a closed environment for manufacturing, for example, in the processes of drying and leakage detection of the battery; in an actual production process, the battery is taken out from the support cup by a manipulator and adjusted in posture, then placed into a sealed box for operations such as drying and leakage detection, and after the operations are completed, the battery is placed into the support cup by the manipulator, and in the process of carrying and transferring the battery by the manipulator, the charging action of the manipulator includes: first, the manipulator is translated to a position above the battery; then, the manipulator is lowered to the height of the battery; then, a gripper of the manipulator clamps the battery, the manipulator raises, the manipulator is translated to the cavity of the sealed box, and the manipulator is lowered to the height of the cavity; then, the gripper of the manipulator is released, the manipulator raises, and the battery is loaded into the cavity of the sealed box; and finally, the sealed box is translated to an operating station, and the manipulator is various in motion beat, has many action steps, and is complicated, which is difficult to meet the high-speed manufacturing requirements of the battery.

In order to increase the operation speed of the battery, the embodiment of the present application provides a battery production device, which includes a frame, a moving mechanism, and a cover body, where the moving mechanism is connected to the frame, and the moving mechanism has a first station; during production and manufacturing, the battery is placed in the first mounting cavity of the first support cup, the moving mechanism moves the first support cup loaded with the battery to the first station, and then the cover covers the first support cup located on the first station and seals the first mounting cavity, so that the battery is located in the sealed first mounting cavity, and thus the battery is placed in a closed environment; and in this process, the moving mechanism does not need to take the battery out of the support cup, which reduces the movement of the mechanism, simplifies the operating action, is beneficial to increasing the production efficiency of the battery, and is then beneficial to meeting the high-speed manufacturing requirements of the battery.

The battery production device in this embodiment of the present application may be applied to processes such as battery drying and leakage detection, and certainly, may further be applied to some other processes where the battery needs to be placed in a closed space for production and manufacturing.

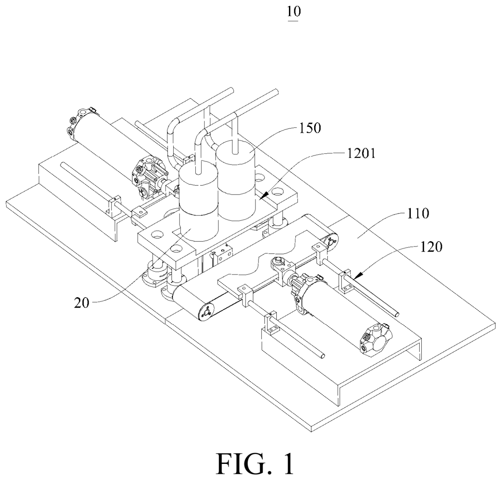

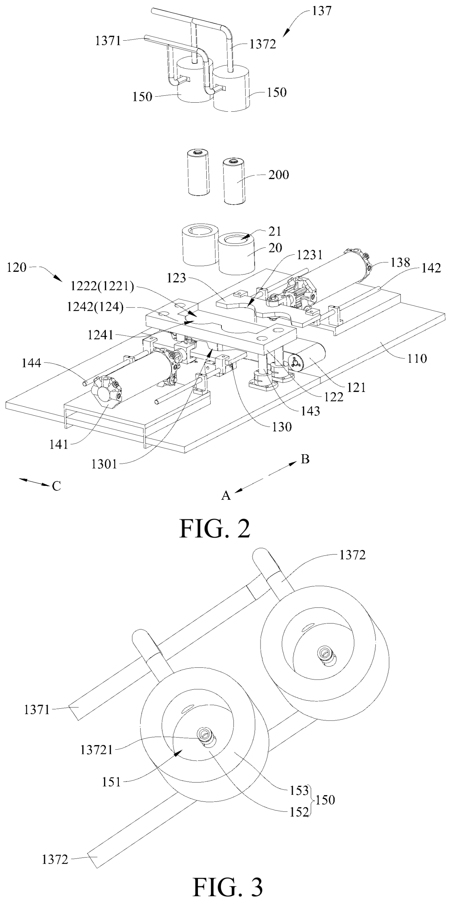

Description in conjunction with the battery production device in some embodiments will be made below:
As shown in FIG. 1 and FIG. 2, in an embodiment of the present application, a battery production device 10 is provided, including a frame 110, a moving mechanism 120, and a cover body 150, where the moving mechanism 120 is connected to the frame 110, the moving mechanism 120 has a first station 1201, the moving mechanism 120 is used for moving a first support cup 20 to a first station 1201, and the first support cup 20 has a first mounting cavity 21 configured to receive a battery 200 therein; and the cover body 150 is used for sealing and covering the first support cup 20, so as to seal the first mounting cavity 21.

The frame 110 may refer to a mounting base of the moving mechanism 120 and the cover body 150, and serves as a component for supporting the moving mechanism 120 and the cover body 150, the frame 110 may be a frame structure or a plate-shaped structure, and the frame 110 may be made of a metal material such as a profile or a steel plate to stably support the components such as the moving mechanism 120 and the cover body 150. Certainly, in other embodiments, the frame 110 may also be made of a plastic material such as plastic steel.

The moving mechanism 120 may refer to a mechanism capable of driving the first support cup 20 to move to the first station 1201, and the first station 1201 may refer to a position where the first support cup 20 is located when the cover body 150 closes the first support cup 20. The first support cup 20 may refer to a cup-shaped component for bearing the battery 200, and the first mounting cavity 21 may refer to a cavity formed in the first support cup 20, and the cavity is also capable of receiving the battery 200. The first support cup 20 may have various shapes, such as a cylinder and a polygonal prism.

The cover body 150 may refer to a component that can seal and cover the first support cup 20, and it may be understood that the cover body 150 covers an opening of the first mounting cavity 21 and seals the opening of the first mounting cavity 21, so that the first mounting cavity 21 is sealed, and the battery 200 is sealed in the sealed first mounting cavity 21, where the sealing and covering herein may mean that after the first mounting cavity 21 is sealed, the gas in the first mounting cavity 21 is difficult to leak from the joint between the first support cup 20 and the cover body 150, and the sealing requirements for the sealed space in the process of drying, leakage detection and the like of the sealed space can be met.

A working process of the battery production device 10 in this embodiment of the present application is as follows:
First, the battery 200 is placed in the first mounting cavity 21 of the first support cup 20, the moving mechanism 120 then moves the first support cup 20 loaded with the battery 200 to the first station 1201, and then the cover body 150 seals and closes the first support cup 20 located at the first station 1201, thereby sealing the first mounting cavity 21, so that the battery 200 is placed in the closed space, and finally, operations such as drying and leakage detection are performed on the battery 200.

In the battery production device 10 in this embodiment of the present application, the moving mechanism 120 directly moves the first support cup 20 loaded with the battery 200 to the first station 1201, and then the cover body 150 seals and covers the first support cup 20 located at the first station 1201, so as to seal the first mounting cavity 21 of the first support cup 20, and thus the battery 200 is placed in the sealed first mounting cavity 21, and in this process, the moving mechanism 120 does not need to take the battery 200 out of the support cup, which reduces the movement of the mechanism, simplifies the operating action, is beneficial to increasing the production efficiency of the battery 200, and is then beneficial to meeting the high-speed manufacturing requirements of the battery 200.

The battery production device 10 in this embodiment of this application changes a material transfer manner in a manner of using a manipulator and a sealed box body, thereby improving production efficiency.

In another embodiment of the present application, as shown in FIG. 2 and FIG. 3 together, the provided battery production device 10 further includes a leakage detection mechanism 137 used for detecting a leakage condition of the battery 200.

The leakage detection mechanism 137 may be a mechanism capable of detecting a leakage situation on the battery 200 in the sealed space.

By adopting the technical solution of this embodiment, after the first mounting cavity 21 is sealed, the battery 200 may be subjected to a leakage detection test through the leakage detection mechanism 137.

In another embodiment of the present application, as shown in FIG. 2 and FIG. 3, the leakage detection mechanism 137 of the provided battery production device 10 includes a vacuumizing component 1371, a gas charging component 1372, and a detection component, where a vacuumizing port of the vacuumizing component 1371 is communicated with the first mounting cavity 21, the gas charging component 1372 is used for charging the battery 200 with a detection gas, and a detection port of the detection component is communicated with the first mounting cavity 21, so as to detect whether there is the detection gas in the first mounting cavity 21.

The vacuumizing component 1371 may refer to a component for vacuumizing the sealed first mounting cavity 21, the vacuumizing port of the vacuumizing component 1371 is communicated with the first mounting cavity 21, and after the first mounting cavity 21 is sealed, the vacuumizing component 1371 vacuumizes air in the first mounting cavity 21, so that the first mounting cavity 21 is in a vacuum state.

The gas charging component 1372 may refer to a component that charges the detection gas into the battery 200 located in the closed space. The detection gas may refer to a gas used for detecting whether the battery 200 leaks, such as helium, and a gas charging nozzle 13721 of the gas charging component 1372 is communicated with the interior of the battery 200, thereby charging the detection gas into the interior of the battery 200.

The detection component may refer to a component that detects whether three is the detection gas in the first mounting cavity 21; for example, the detection component may be a helium detection device capable of detecting helium, where a detection end of the detection component may be disposed in a vacuumizing pipeline of the vacuumizing component 1371, or may be disposed in the first mounting cavity 21.

By adopting the technical solution of this embodiment, after the first mounting cavity 21 is sealed, the vacuumizing component 1371 vacuumizes the first mounting cavity 21, and the gas charging component 1372 charges the detection gas into the battery 200; in a case that there is a leakage point in the battery 200, the detection gas flows into the first mounting cavity 21 from the leakage point, and the detection component detects that there is the detection gas in the first mounting cavity 21, thereby determining that there is the leakage point in the battery 200 and the battery 200 is unqualified; and in a case that there is no leakage point in the battery 200, the detection gas does not leaked into the first mounting cavity 21, and the detection component does not detect the detection gas, thereby determining that there is no leakage point in the battery 200 and the battery 200 is qualified, thus, realizing leakage detection of the battery 200.

In another embodiment of the present application, as shown in FIG. 3, the cover body 150 of the provided battery production device 10 is provided with a second mounting cavity 151, and in a case where the cover body 150 covers the first support cup 20, the first mounting cavity 21 is communicated with the second mounting cavity 151 and forms a closed space configured to accommodate the battery 200 therein.

The second mounting cavity 151 may refer to a cavity formed in the cover body 150, and the cavity may be configured such that the first mounting cavity 21 and the second mounting cavity 151 are butted together when the cover body 150 closes the first support cup 20, thereby forming a sealed space together, and the battery 200 may be placed in the sealed space. Exemplarily, the first support cup 20 is a cylindrical cup, the cover body 150 is a cylindrical cup, the opening of the first support cup 20 faces upward, the battery 200 is vertically placed in the first mounting cavity 21 of the first support cup 20, and the upper portion of the battery 200 is exposed outside the first support cup 20, and then the cover body 150 inversely seals and covers the first support cup 20, so that the battery 200 is placed in the closed space.

By adopting the technical solution of this embodiment, in the process of sealing and closing the first support cup 20 with the cover body 150, a cavity wall of the first mounting cavity 21 may be in contact with the battery 200, thereby guiding the cover body 150 to stably seal and close the first support cup 20, which is beneficial to improving the success rate of closing the cover body 150.

In another embodiment of the present application, as shown in FIG. 3, the cover body 150 of the provided battery production device 10 includes a plate portion 152 and a wall portion 153, the plate portion 152 is connected to the wall portion 153, the wall portion 153 is disposed around the plate portion 152, the wall portion 153 and the plate portion 152 enclose to form a second mounting cavity 151, and an end of the wall portion 153 facing away from the plate portion 152 is used for sealing and covering the first support cup 20.

The plate portion 152 may refer to a plate-shaped portion of the cover body 150 located at the top when the cover body seals and covers the first support cup 20. The wall portion 153 may refer to a portion annularly disposed around the plate portion 152, the portion is annular, and the shape of the portion may be various, such as circle, polygon, and ellipse; an inner peripheral wall of the wall portion 153 and a lower surface of the plate portion 152 are jointly enclosed to form the second mounting cavity 151, and an end of the wall portion 153 facing away from the plate portion 152 can seal and cover the first support cup 20, so that the first mounting cavity 21 and the second mounting cavity 151 jointly form a closed space, and the battery 200 is located in the closed space. The plate portion 152 is connected to the wall portion 153, and it can be understood that the plate portion 152 and the wall portion 153 may be connected in a sealed manner, for example, by using a sealing ring, a sealant, and the like, so that the closed space is sealed; in another embodiment, the plate portion 152 and the wall portion 153 may also be an integrated structure manufactured by an integrated molding process such as integral injection molding or integral cutting.

Generally, by adopting the technical solution of this embodiment, the cover body 150 is in a structural form of the plate portion 152 and the wall portion 153, which is simple in structure and convenient to process and manufacture.

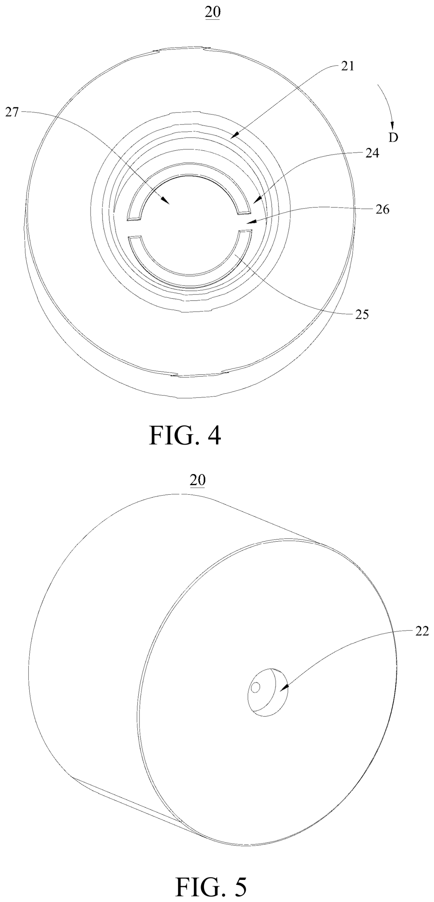

In another embodiment of the present application, as shown in FIG. 4 and FIG. 5, the bottom wall of the first mounting cavity 21 of the provided battery production device 10 is configured with an avoidance groove 24 for avoiding a welded seam at the bottom of the battery 200.

The avoidance groove 24 may refer to a groove structure formed on a cavity bottom wall of the first mounting cavity 21, and the groove structure may accommodate the welded seam at the bottom of the battery 200, where in a case where the battery 200 is placed in the first mounting cavity 21, the cavity bottom wall of the first mounting cavity 21 may refer to a lower wall surface of the first mounting cavity 21 (as shown in FIG. 4), and the welded seam at the bottom of the battery 200 may refer to a welded seam at a lower portion of the battery 200.

By adopting the technical solution of this embodiment, when the battery 200 is placed in the first mounting cavity 21 of the first support cup 20, the avoidance groove 24 can provide a receiving space for a welded seam at the bottom of the battery 200, thereby reducing the risk that the welded seam at the bottom of the battery 200 is in contact with the first support cup 20 and reducing the risk that the battery 200 is damaged.

In another embodiment of the present application, as shown in FIG. 4, a bottom wall of the first mounting cavity 21 of the provided battery production device 10 is configured with a support protrusion 25 for supporting the battery 200, and an avoidance groove 24 is formed between a side wall surface of the support protrusion 25 proximal to the peripheral wall of the mounting cavity and the peripheral wall of the mounting cavity.

The support protrusion 25 may refer to a protrusion structure formed on the cavity bottom wall of the first mounting cavity 21, and in a case where the battery 200 is placed in the first mounting cavity 21, the support protrusion 25 is supported on the bottom surface of the battery 200, thereby playing a role of supporting the battery 200, and at the same time, the support protrusion 25 may separate the bottom surface of the battery 200 from the bottom wall of the first mounting cavity 21 and form a separation space, and the separation space forms an avoidance groove 24 in a space between a side wall surface of the support protrusion 25 proximal to the peripheral wall of the mounting cavity and the peripheral wall of the mounting cavity.

By adopting the technical solution of this embodiment, the support protrusion 25 is configured on the cavity bottom wall of the first mounting cavity 21, so that the avoidance groove 24 may be formed, which has a simple structure and is convenient to process and manufacture.

In another embodiment of the present application, as shown in FIG. 4, the support protrusion 25 of the provided battery production device 10 includes an annular protrusion, the annular protrusion surrounds to form an inner hole 27, an avoidance groove 24 is formed between an outer peripheral wall of the annular protrusion and the peripheral wall of the first mounting cavity 21, and the annular protrusion is provided with a communication structure 26 for communicating the avoidance groove 24 with the inner hole 27.

The annular protrusion may refer to a protrusion structure formed on the bottom wall of the first mounting cavity 21 and extending along the circumferential direction of the first mounting cavity 21 (with reference to the direction indicated by the arrow D), and the protrusion structure is annular, so that the battery 200 is placed on the annular protrusion, the periphery of the bottom of the battery 200 is supported, and the stability of the battery 200 in the first support cup 20 is good; in addition, in a case where the bottom of the battery 200 is welded for one circle, a circle of welded seam is formed at the bottom of the battery 200, and an avoidance groove 24 is formed between the outer peripheral wall of the annular protrusion and the peripheral wall of the first mounting cavity 21; and it may be understood that the avoidance groove 24 is annular, which can provide a receiving space for the circle of welded seam at the bottom of the battery 200.

The inner hole 27 may refer to a hole structure formed by enclosing the inner wall surface of the annular protrusion.

The communication structure 26 may refer to a structure capable of communicating the inner hole 27 with the avoidance groove 24, and the structure may be a hole, a groove, a notch, or the like, where there may be a plurality of communication structures 26, and the plurality of communication structures 26 are distributed in a spaced manner along the circumferential direction of the first mounting cavity 21.

By adopting the technical solution of this embodiment, in a case where the battery 200 is placed on the annular protrusion, the inner hole 27 may pass through the communication structure 26 and the avoidance groove 24, so that in an actual leakage detection process, a detection gas leaked from a leakage point at the bottom of the battery 200 will enter the avoidance groove 24 through the communication structure 26, and then enter the first mounting cavity 21 from the avoidance groove 24, so as to be detected by the leakage detection mechanism 137. Thus, whether there is a leakage point at the bottom of the battery 200 may be detected, which is beneficial to reducing the dead angle of leakage detection and improving the accuracy of detection.

In another embodiment of the present application, as shown in FIG. 2, the moving mechanism 120 of the provided battery production device 10 includes a first conveying member 121, a support platform 122, and a first pushing member 123 that are connected to the frame 110, where the first conveying member 121 is used for conveying the first support cup 20, the support platform 122 is disposed on one side of the first conveying member 121, the support platform 122 is located at the first station 1201, and the first pushing member 123 is capable of pushing the first support cup 20 located on the first conveying member 121 to move in a first direction, the first direction being a direction from the first conveying member 121 to the support platform 122.

The first conveying member 121 may refer to a conveying component for conveying the first support cup 20, and the first conveying member 121 may be a conveyor belt (for example, a flexible conveyor belt), a conveying roller, or the like.

The support platform 122 may refer to a component for bearing the first support cup 20, the support platform 122 is located on the first station 1201 and located on one side of the first conveying member 121, and the support platform 122 may be a plate.

The first pushing member 123 may refer to a component capable of pushing the first support cup 20 located on the first conveying member 121 to move in the first direction, where the first direction may refer to a direction from the first conveying member 121 to the support platform 122, and specifically, may refer to a direction indicated by an arrow A in FIG. 2, so that the first pushing member 123 may move the first support cup 20 conveyed by the first conveying member 121 to the support platform 122, that is, the first support cup 20 loaded with the battery 200 is moved to the first station 1201, where the conveying surface of the first conveying member 121 may be substantially located at the same height as the support surface 1221 of the support platform 122, so that the first pushing member 123 may move the first support cup 20 conveyed by the first conveying member 121 to the support surface 1221 of the support platform 122. In an embodiment, the first driving member 138 is connected to the first pushing member 123 and can drive the first pushing member 123 to move in the first direction, so as to realize the movement of the first pushing member 123, and the first driving member 138 may be a component such as a cylinder, a linear module, or a servo mechanism. A first slide rail 142 is connected between the first pushing member 123 and the frame 110, and under the guiding action of the first slide rail 142, the first pushing member 123 may accurately and stably push the first support cup 20 to the support platform 122, and there may be a plurality of the first slide rails 142 to increase the guiding stability and reliability, for example, there are two first slide rails 142, and the two first slide rails 142 are respectively located on two opposite sides of the first pushing member 123.

In the related art, the manipulator needs to place the battery 200 into the sealed box body after performing carrying movements such as separating, translating, turning the battery from the first support cup 20, so the manipulator has many movement actions and the production efficiency is low; in addition, in the actual operation process, the manipulator has many actions, and needs to be debugged for a long time before or during production to ensure the accuracy of the actions; and in addition, by moving the battery 200 by the manipulator, since the load of the manipulator is limited, the number of batteries 200 to be grabbed cannot be increased, or the manipulator with a larger load needs to be selected at a higher cost, the manufacturing cost is greatly increased.

By adopting the technical solution of this embodiment, the first conveying member 121 supports the first support cup 20 loaded with the battery 200 at a support platform 122, then the first pushing member 123 pushes the first support cup 20 on the first conveying member 121 to the support platform 122 along the first direction, and then the cover body 150 seals and covers the first support cup 20, where the battery 200 may be moved from the first conveying member 121 to the support platform 122 by the first pushing member 123, the movement action of the battery 200 is simple and the production efficiency is high; in addition, the movement action is simple, the debugging thereof is simple, the debugging efficiency is high, which is more beneficial to improving the production efficiency, and the structure of the overall device is simple; moreover, a plurality of first support cups 20 may be simultaneously pushed to move by the first pushing member 123, which is beneficial to reducing the manufacturing cost.

In another embodiment of the present application, as shown in FIG. 2, a side portion of the first pushing member 123 of the provided battery production device 10 facing the support platform 122 is provided with a first engaging groove 1231 for engaging with the peripheral wall of the first support cup 20.

The first engaging groove 1231 may refer to a groove structure in which the first pushing member 123 is engaged with the peripheral wall of the first support cup 20, and the groove structure is located on one side portion of the first pushing member 123 facing the support platform 122. In this way, in a case where the first pushing member 123 moves along the first direction, the first support cup 20 can be engaged into the first engaging groove 1231 and pushed to move to the support platform 122 along with the first pushing member 123, the shape of the first engaging groove 1231 is matched with or the same as the shape of the peripheral wall of the first support cup 20 to better engage with the first support cup 20, thereby stably pushing the first support cup 20 to move, for example, the first support cup 20 is cylindrical, and the shape of the first engaging groove 1231 is a semicircular groove to more stably push the first support cup 20 to move.

By adopting the technical solution of this embodiment, in the process of pushing the first support cup 20 to move by the first pushing member 123, the first support cup 20 is engaged in the first engaging groove 1231, and the first support cup 20 is limited by the first engaging groove 1231, and may move stably and reliably with the first pushing member 123, and then move to the support platform 122 more stably.

In an embodiment, there are a plurality of first engaging grooves 1231, and the plurality of first engaging grooves 1231 are sequentially arranged along the conveying direction of the first conveying member 121 (with reference to the direction indicated by the arrow C in FIG. 2), so that the first pushing member 123 can simultaneously push the plurality of first support cups 20 to the support platform 122, and exemplarily, there are two more 8 first engaging grooves 1231, and certainly, in other embodiments, there may be one, three, four or more first engaging grooves 1231.

In another embodiment of the present application, as shown in FIG. 2, the support platform 122 of the battery production device 10 provided is provided with a support surface 1221 for supporting the battery 200, the moving mechanism 120 further includes a limiting member 124, and the limiting member 124 is used for protruding out of the support surface 1221, so that a region of the support surface 1221 located between the limiting member 124 and the first conveying member 121 forms an accommodating region 1222 configured to accommodate the first support cup 20.

The support surface 1221 may refer to a surface of the support platform 122 for supporting the first support cup 20, for example, the support surface 1221 is an upper surface of the support platform 122.

The limiting member 124 may refer to a component protruding from the support surface 1221.

The accommodating region 1222 may refer to a region of the support surface 1221 located between the limiting member 124 and the first conveying member 121 in a case where the limiting member 124 protrudes out of the support surface 1221, and the region is used for accommodating the first support cup 20 and supporting the first support cup 20.

By adopting the technical solution of this embodiment, in a case where the limiting member 124 protrudes from the support surface 1221, after the first pushing member 123 pushes the first support cup 20 to move the accommodating region 1222, the first support cup 20 may abut against the side of the limiting member 124 facing the first conveying member 121, so that the first support cup 20 may be positioned on the support platform 122 may be realized, which is beneficial for the cover body 150 to accurately seal and cover the first support cup 20.

In another embodiment of the present application, as shown in FIG. 2, a side portion of the limiting member 124 of the battery production device 10 facing the first conveying member 121 is formed with a second engaging groove 1241, and the second engaging groove 1241 is used for engaging with the peripheral wall of the first support cup 20.

The second engaging groove 1241 may refer to a groove structure in which the limiting member 124 is engaged with the peripheral wall of the first support cup 20, and the groove structure is formed on a side of the limiting member 124 facing the first conveying member 121. In this way, after the first support cup 20 enters the receiving region 1211, under the pushing of the first pushing member 123, the first support cup 20 can be clamped into the second engaging groove 1241 to achieve more accurate positioning, the shape of the second engaging groove 1241 is matched with or the same as the shape of the peripheral wall of the first support cup 20 to better engage with the first support cup 20, thereby achieving accurate positioning of the first support cup 20, for example, the first support cup 20 is cylindrical, and the shape of the second engaging groove 1241 is a semicircular groove to achieve more accurate positioning of the battery 200.

By adopting the technical solution of this embodiment, after the first support cup 20 is engaged in the second engaging groove 1241, the first support cup 20 is limited by the second engaging groove 1241, and the first support cup 20 can be accurately positioned on the support platform 122, so that the cover body 150 can be more accurately sealed with the first support cup 20 subsequently.

In an embodiment, there are a plurality of second engaging grooves 1241, and the plurality of second engaging grooves 1241 are sequentially arranged along the conveying direction of the first conveying member 121, so that the support platform 122 can simultaneously meet the bearing requirements of the plurality of first support cups 20, the number of the first engaging grooves 1231 is the same as the number of the second engaging grooves 1241; and exemplarily, there are two or 8 second engaging grooves 1241, and certainly, in other embodiments, there may be one, three, four or more second engaging grooves 1241.

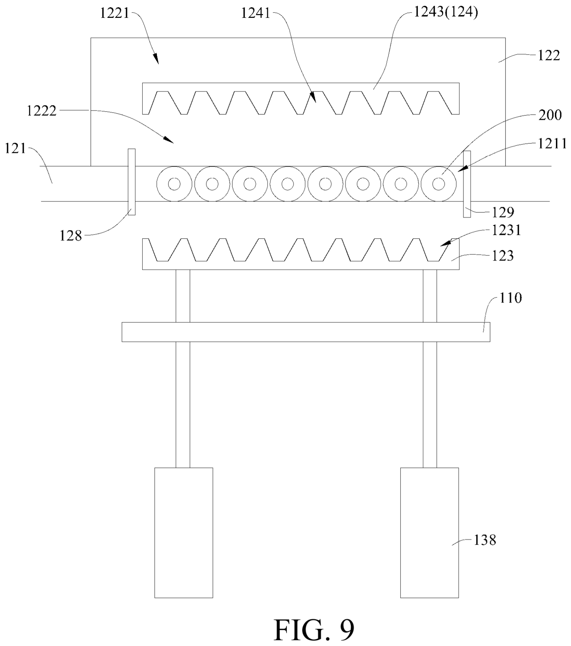

In another embodiment of the present application, as shown in FIG. 2 and FIG. 9, the limiting member 124 of the provided battery production device 10 includes a limiting protrusion 1242 protruding from the support surface 1221, and/or the limiting member 124 includes a limiting portion 1243, and the limiting portion 1243 is movable relative to the support platform 122 to protrude from the support surface 1221.

It may be understood that, as shown in FIG. 2, the limiting member 124 includes a limiting protrusion 1242 protruding from the support surface 1221; or, as shown in FIG. 9, the limiting member 124 includes a limiting portion 1243, the limiting portion 1243 is movable relative to the support platform 122 to protrude out of the support surface 1221; or, the limiting member 124 includes a limiting protrusion 1242 protruding from the support surface 1221, the limiting member 124 further includes a limiting portion 1243, and the limiting portion 1243 is movable relative to the support platform 122 to protrude out of the support surface 1221.

The limiting protrusion 1242 may refer to a protrusion structure protruding from the support surface 1221, exemplarily, the limiting protrusion 1242 may refer to a protrusion structure protruding upward from the support surface 1221, and the limiting protrusion 1242 may be obtained by integral processing such as integral injection molding, integral cutting processing or integral pouring with the support platform 122, and certainly, in another embodiment, the limiting protrusion 1242 may also be connected with the support platform 122 by means of threads, engaging, and the like. The limiting protrusion 1242 protrudes out of the support surface 1221, so as to abut against the first support cup 20 pushed by the first pushing member 123, thereby realizing the positioning of the first support cup 20.

The limiting portion 1243 may refer to a component movable relative to the support surface 1221, where it may mean that the limiting portion 1243 is movable, so as to realize the relative movement between the limiting portion 1243 and the support surface 1221 to protrude out of the support surface 1221, where the limiting portion 1243 may be driven to move by a driving member such as a cylinder, a linear module, and a servo mechanism; or it may mean that the limiting portion 1243 is fixed, and the support platform 122 is movable, so that the limiting member 124 can protrude out of the support surface 1221. In this way, the limiting portion 1243 protrudes out of the support surface 1221, so as to abut against the first support cup 20 pushed by the first pushing member 123, thereby realizing the positioning of the first support cup 20, and in a case where the limiting portion 1243 retracts below the support surface 1221, the first pushing member 123 may push the first support cup 20 out of the other side of the support platform 122 facing away from the first conveying member 121.

By adopting the technical solution of this embodiment, the structure of the limiting member 124 may be flexibly arranged, which facilitates processing and manufacturing.

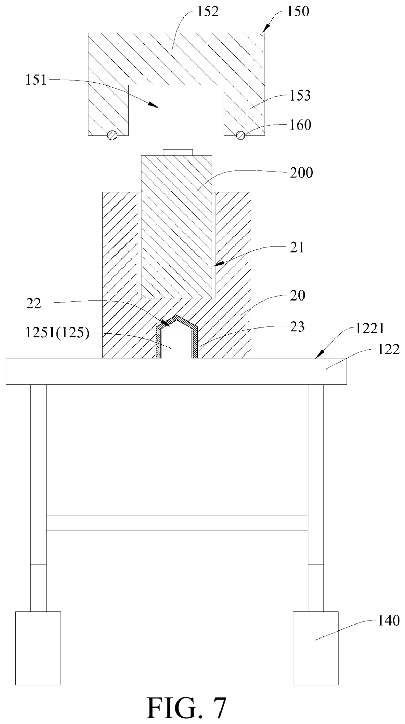

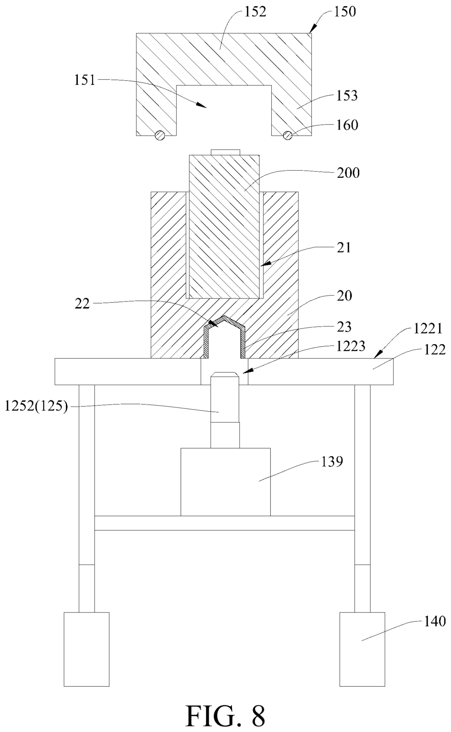

In another embodiment of the present application, as shown in FIG. 7 and FIG. 8 together, the support platform 122 of the provided battery production device 10 is provided with a support surface 1221 for supporting the battery 200 and a positioning member 125 capable of protruding from the support surface 1221, and the bottom of the first support cup 20 is provided with a positioning hole 22 for inserting the positioning member 125.

The positioning member 125 may refer to a component that can protrude from the support surface 1221, and the component can be inserted into the positioning hole 22 at the bottom of the first support cup 20, thereby realizing the positioning of the first support cup 20.

The positioning hole 22 may refer to a hole structure formed on the bottom surface of the first support cup 20, and the hole structure can be inserted by the positioning member 125 to position the first support cup 20; and exemplarily, the bottom of the first support cup 20 may refer to the lower portion of the first support cup 20 when placed on the support platform 122.

By adopting the technical solution of this embodiment, after the first support cup 20 is pushed onto the support platform 122 by the first pushing member 123, the positioning member 125 is inserted into the positioning hole 22, thereby limiting the movement of the first support cup 20 and realizing the accurate positioning of the first support cup 20, so that the subsequent cover body 150 can accurately seal and cover the first support cup 20.

In another embodiment of the present application, as shown in FIG. 7 and FIG. 8 together, the positioning member 125 of the provided battery production device 10 includes a positioning protrusion 1251 protruding from the support surface 1221, and/or the positioning member 125 includes a positioning portion 1252, the support platform 122 is provided with a through hole 1223 penetrating through the support surface 1221, and the positioning portion 1252 is used for moving in the through hole 1223 to protrude from the support surface 1221.

It may be understood that the positioning member 125 includes a positioning protrusion 1251 protruding from the support surface 1221; or the positioning member 125 includes a positioning portion 1252, the support platform 122 is provided with a through hole 1223 penetrating through the support surface 1221, and the positioning portion 1252 is used for ascending and descending in the through hole 1223 to protrude from the support surface 1221; or the positioning member 125 includes a positioning portion 1252 and a positioning protrusion 1251 protruding from the support surface 1221, the support platform 122 is provided with a through hole 1223 penetrating through the support surface 1221, and the positioning portion 1252 is used for moving in the through hole 1223 to protrude from the support surface 1221.

The positioning protrusion 1251 may refer to a protrusion structure protruding from the support surface 1221, exemplarily, the positioning protrusion 1251 may refer to a protrusion structure protruding upward from the support surface 1221, and the positioning protrusion 1251 may be obtained by integral processing such as integral injection molding, integral cutting processing or integral pouring with the support platform 122, and certainly, in another embodiment, the positioning protrusion 1251 may also be connected with the support platform 122 by means of threads, engaging, and the like. The positioning protrusion 1251 protrudes out of the support surface 1221, so that it can be inserted into the positioning hole 22 at the bottom of the first support cup 20, thereby realizing the accurate positioning of the first support cup 20. The structure of the positioning protrusion 1251 may be designed according to the size of the first support cup 20 and the pushing force of the first pushing member 123, so that in the process that the first pushing member 123 pushes the first support cup 20 to the support platform 122, the first support cup 20 can be lifted up along a guiding cambered surface at the top of the positioning protrusion 1251, so that the positioning protrusion 1251 can be smoothly inserted into the positioning hole 22.

The through hole 1223 may refer to a hole structure penetrating through the support platform 122, and the hole structure may provide a lifting space for the lifting of the positioning portion 1252.

The positioning portion 1252 may refer to a component movable in the through hole 1223; in an actual use process, when the first pushing member 123 pushes the first support cup 20 to the support platform 122 but not in place, the positioning portion 1252 may retract into the through hole 1223, so that the first support cup 20 smoothly moves on the support surface 1221, and after the first support cup 20 moves in place, the positioning portion 1252 may protrude from the support surface 1221 in the through hole 1223, so as to be inserted into the positioning hole 22, thereby realizing the accurate positioning of the first support cup 20. For example, the second driving member 139 may drive the positioning portion 1252 to ascend and descend in the through hole 1223, the second driving member 139 may drive the positioning portion 1252 to move downward to retract into the through hole 1223, so as to move to a position below the support surface 1221; and in addition, the second driving member 139 may drive the positioning portion 1252 to move upward, so that at least a part of the positioning portion 1252 protrudes out of the through hole 1223 to protrude out of the support surface 1221 to an upper side, and then is inserted into the positioning hole 22, thereby realizing accurate positioning of the first support cup 20.

By adopting the technical solution of this embodiment, the structure of the positioning member 125 may be flexibly arranged, which facilitates processing and manufacturing.

In another embodiment of the present application, as shown in FIG. 7 and FIG. 8 together, a wear-resistant layer 23 is disposed on an inner wall of the positioning hole 22 of the provided battery production device 10.

The wear-resistant layer 23 may refer to a component made of a wear-resistant material, and the wear-resistant material may be a material such as a hard metal or a ceramic, where the wear-resistant layer 23 covers the inner wall of the positioning hole 22, and the wear-resistant layer 23 may be connected to the inner wall of the positioning hole 22 by means of embedding or spraying.

By adopting the technical solution of this embodiment, the arrangement of the wear-resistant layer 23 may reduce the wear of the positioning hole 22 and prolong the service life.

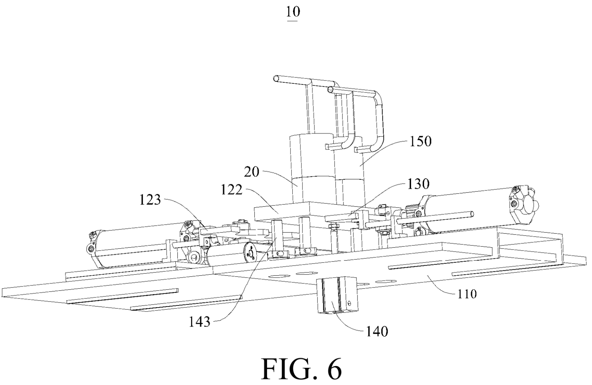

In another embodiment of the present application, as shown in FIG. 6, FIG. 7, and FIG. 8 together, the support platform 122 of the provided battery production device 10 can move toward the cover body 150, so that the cover body 150 seals and covers the first support cup 20 located on the support platform 122.

It may be understood that the support platform 122 moves toward the cover body 150, and the support platform 122 drives the first support cup 20 to move toward the cover body 150, so that the first support cup 20 can seal and cover the cover body 150; exemplarily, the third driving member 140 starts the support platform 122 to move upward, thereby driving the first support cup 20 to move upward, so that the first support cup 20 seals and covers the cover body 150, where the cover body 150, driven by the fourth driving member, may also move downward, so that the first support cup 20 and the cover body 150 move relative to each other at the same time, which may increase the production efficiency; the third driving member 140 drives the support surface 1221 of the support platform 122 to move to be flush with the conveying surface of the first conveying member 121, so as to facilitate the movement of the first support cup 20 between the first conveying member 121 and the support platform 122; and in another embodiment, the cover body 150 may also be fixed, so that the structure is simple and convenient to manufacture. The third driving member 140 and the fourth driving member may be driving components such as cylinders, linear modules, and servo mechanisms. A second slide rail 143 is connected between the support platform 122 and the frame 110, and under the guiding action of the second slide rail 143, the support platform 122 drives the first support cup 20 to move upward stably and reliably, which is also beneficial for the first support cup 20 to accurately seal and close the cover body 150; there may be a plurality of second slide rails 143 to increase the guiding stability and reliability; and exemplarily, there are four second slide rails 143, and the four second slide rails 143 are respectively located at four corners of the support platform 122.

By adopting the technical solution of this embodiment, the support platform 122 moves toward the cover body 150, which is easy to implement, simple in structure, and convenient to process and manufacture.

In another embodiment of the present application, the cover body 150 of the provided battery production device 10 can move toward the first station 1201, so that the cover body 150 seals and covers the first support cup 20 located at the first station 1201.

It may be understood that the cover body 150 can move toward the first station 1201 to seal and cover the first support cup 20 located at the first station 1201, and the cover body 150 may also move away from the first station 1201 to be separated from the first support cup 20 to facilitate the subsequent closing and sealing operation of the first support cup 20; exemplarily, the cover body 150 is located above the first station 1201, and when the first support cup 20 moves to the first station 1201, the fourth driving member may drive the cover body 150 to move downward, so that the cover body 150 seals and covers the first support cup 20 located at the first station 1201, and after the operations such as leakage detection and drying are completed, the fourth driving member may drive the cover body 150 to move upward, so that the cover body 150 is separated from the first support cup 20 located at the first station 1201 to facilitate the subsequent closing and sealing of the first support cup 20.

By adopting the technical solution of this embodiment, the cover body 150 may close and cover the first support cup 20 located at the first station 1201 by moving the cover body 150.

In another embodiment of the present application, as shown in FIG. 7 and FIG. 8 together, the provided battery production device 10 further includes a sealing member 160, and the cover body 150 and the first support cup 20 are hermetically connected by the sealing member 160.

The sealing member 160 may refer to a component capable of sealing a joint between the cover body 150 and the first support cup 20.

By adopting the technical solution of this embodiment, the sealing member 160 may seal the joint between the cover body 150 and the first support cup 20, thereby reducing the risk of leakage of the first mounting cavity 21 and improving the sealing performance of the first mounting cavity 21.

In another embodiment of the present application, the sealing member 160 of the provided battery production device 10 includes at least one of a sealing ring and a sealant.

It may be understood that the sealing member 160 includes a sealing ring, the sealing ring is clamped between the cover body 150 and the first support cup 20 and is deformed by clamping of the sealing ring, thereby realizing sealing and reducing the risk of leakage, the sealing ring may be a silica gel sealing ring or the like; or the sealing member 160 includes a sealant, after the cover body 150 and the first support cup 20 are covered, the sealant is coated at the joint between the cover body 150 and the first support cup 20, and after the sealant is cured, a gap at the joint of the cover body 150 and the first support cup 20 is blocked, thereby realizing sealing, and the sealant may be a rubber sealant, a resin sealant, an oil-based sealant, a natural polymer sealant, or the like; and the sealing member 160 includes a sealant and a sealant, so that the joint between the cover body 150 and the first support cup 20 has better sealing performance by adopting two sealing manners at the same time.

By adopting the technical solution of this embodiment, the sealing member 160 may be flexibly selected and arranged, which facilitates processing and manufacturing.

In another embodiment of the present application, as shown in FIG. 9, FIG. 10, and FIG. 11 together, the moving mechanism 120 of the provided battery production device 10 further includes a first blocking member 126, and the first blocking member 126 is movable between the support platform 122 and the first conveying member 121 to block the first support cup 20, and/or the moving mechanism 120 further includes a second blocking member 127, and the second blocking member 127 is movable to a side of the first conveying member 121 facing away from the support platform 122 to block the first pushing member 123.

It may be understood that the moving mechanism 120 further includes a first blocking member 126, and the first blocking member 126 is movable between the support platform 122 and the first conveying member 121 to block the first support cup 20; or the moving mechanism 120 further includes a second blocking member 127, and the second blocking member 127 is movable to a side of the first conveying member 121 facing away from the support platform 122 to block the first pushing member 123; or the moving mechanism 120 further includes a first blocking member 126 and a second blocking member 127, and the first blocking member 126 is movable between the support platform 122 and the first conveying member 121 to block the first support cup 20, and the second blocking member 127 is movable to a side of the first conveying member 121 facing away from the support platform 122 to block the first pushing member 123.

The first blocking member 126 may refer to a component movable between the first support platform 122 and the first conveying member 121. The first support cup 20 moves to the support platform 122, the first blocking member 126 is movable out between the first conveying member 121 and the support platform 122, and the first pushing member 123 can push the first support cup 20 of the first conveying member 121 to the support platform 122 along the first direction, thereby realizing charging of the support platform 122; after charging is completed, the first blocking member 126 extends into and moves between the first conveying member 121 and the support platform 122, the first blocking member 126 may also block the first support cup 20 of the first conveying member 121 from mistakenly entering the support platform 122 due to an external force and pushing the first support cup 20 on the support platform 122 to move, thereby improving the accuracy of sealing the cover body 150 and the first support cup 20; exemplarily, the fifth driving member may drive the first blocking member 126 to move up and down, so that the first blocking member 126 may move between the support platform 122 and the first conveying member 121 to block the first support cup 20 of the first conveying member 121 from entering the support platform 122, or the first blocking member 126 may move out between the support platform 122 and the first conveying member 121, so that the first pushing member 123 can push the first support cup 20 of the first conveying member 121 into the support platform 122, so that the support platform 122 can load normally. The fifth driving member may be a driving component such as a cylinder, a linear module, and a servo mechanism.

The second blocking member 127 may refer to a component movable to a side of the first conveying member 121 facing away from the support platform 122. After the first support cup 20 moves to the support platform 122, the first blocking member 126 is movable out between the first conveying member 121 and the support platform 122, and the second blocking member 127 may be movable out of the side of the first conveying member 121, the first pushing member 123 can push the first support cup 20 of the first conveying member 121 onto the support platform 122 along the first direction, thereby realizing charging of the support platform 122; and after the charging is completed, the second blocking member 127 is movable to the side of the first conveying member 121 facing away from the support platform 122, so that the second blocking member 127 can block the second pushing member 130 from mistakenly pushing the first support cup 20 on the first conveying member 121. Exemplarily, the sixth driving member may drive the second blocking member 127 to move up and down, so that the second blocking member 127 may move to the side of the first conveying member 121 facing away from the support platform 122 to block the second pushing member 130 from mistakenly pushing the first support cup 20 on the first conveying member 121, or the second blocking member 127 may move out of the side of the first conveying member 121 facing away from the support platform 122, so that the first pushing member 123 can push the first support cup 20 of the first conveying member 121 into the support platform 122, and the support platform 122 can load normally. The sixth driving member may be a driving component such as a cylinder and a linear module.

By adopting the technical solution of this embodiment, the feeding of the support platform 122 is more stable and smoother, which is beneficial to reducing the error rate.

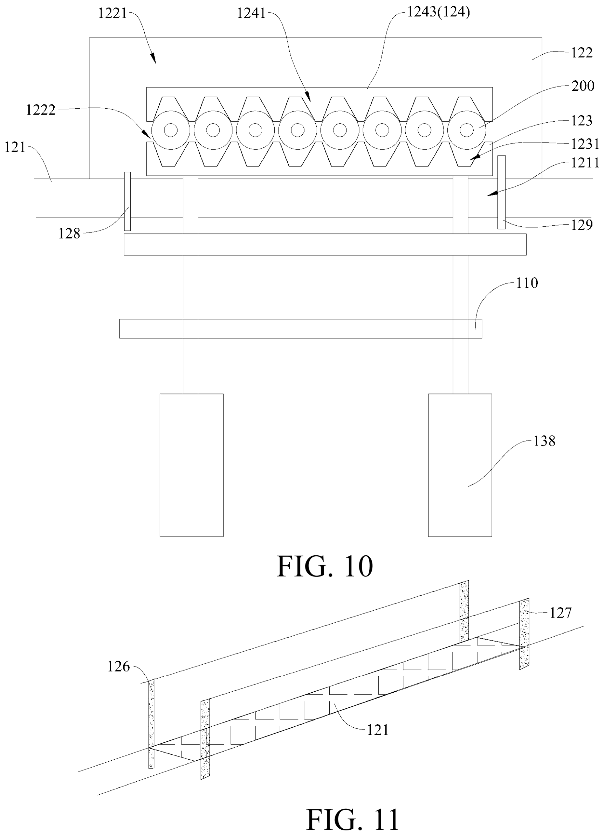

In another embodiment of the present application, as shown in FIG. 9 and FIG. 10 together, the first conveying member 121 of the provided battery production device 10 is configured with a receiving region 1211 configured to receive the first support cup 20 therein, and the receiving region 1211 and the support platform 122 are distributed along the first direction, the moving mechanism 120 further includes a third blocking member 128 for blocking the first support cup 20 from flowing into the receiving region 1211, and/or the moving mechanism 120 further includes a fourth blocking member 129 for blocking the first support cup 20 from flowing out of the receiving region 1211.

It may be understood that the first conveying member 121 is configured with a receiving region 1211 configured to receive the first support cup 20 therein, and the receiving region 1211 and the support platform 122 are distributed along the first direction, the moving mechanism 120 further includes a third blocking member 128, and the third blocking member 128 is used for blocking the first support cup 20 from flowing into the receiving region 1211; or the first conveying member 121 is configured with a receiving region 1211 configured to receive the first support cup 20 therein, and the receiving region 1211 and the support platform 122 are distributed along the first direction, the moving mechanism 120 further includes a fourth blocking member 129, and the fourth blocking member 129 is used for blocking the first support cup 20 from flowing out of the receiving region 1211; or the first conveying member 121 is configured with a receiving region 1211 configured to receive the first support cup 20 therein, and the receiving region 1211 and the support platform 122 are distributed along the first direction, the moving mechanism 120 further includes a third blocking member 128 and a fourth blocking member 129, the third blocking member 128 is used for blocking the first support cup 20 from flowing into the receiving region 1211, and the fourth blocking member 129 is used for blocking the first support cup 20 from flowing out of the receiving region 1211.

The receiving region 1211 may refer to a region on the first conveying member 121 configured to receive the first support cup 20 therein, the region and the support platform 122 are distributed along the first direction, and the first pushing member 123 may push the first support cup 20 in the receiving region 1211 to the support platform 122 at one time. The number of the first support cups 20 received in the receiving region 1211 may be the same as the number of the first support cups 20 that can be pushed by the first pushing member 123 in sequence; exemplarily, the receiving region 1211 may be a region opposite to the first conveying member 121.

The third blocking member 128 may be a component that blocks the first support cup 20 from flowing into the receiving region 1211, and the fourth blocking member 129 may move to one side of the receiving region 1211 along the conveying direction of the first conveying member 121, thereby blocking the first support cup 20 from flowing into the receiving region 1211, which may reduce the risk that the subsequent first support cup 20 enters the receiving region 1211 and pushes the first support cup 20 located in the receiving region 1211 to move, so that the first pushing member 123 can stably push the first support cup 20 in the receiving region 1211 to the support platform 122. Exemplarily, the seventh driving member may drive the third blocking member 128 to move up and down or move back and forth in a direction perpendicular to a paper surface, so that the third blocking member 128 may move to one side of the receiving region 1211 along the conveying direction of the first conveying member 121 to block the first support cup 20 from flowing into the receiving region 1211, or the third blocking member 128 may move out of one side of the receiving region 1211 along the conveying direction of the first conveying member 121, so that the first support cup 20 may smoothly enter the receiving region 1211. The seventh driving member may be a driving component such as an air cylinder and a linear module.

The fourth blocking member 129 may be a component that blocks the first support cup 20 from flowing into the receiving region 1211, and the fourth blocking member 129 may move to the other side of the receiving region 1211 along the conveying direction of the first conveying member 121, thereby blocking the first support cup 20 from flowing out of the receiving region 1211, which may reduce the risk that the first conveying member 121 drives the first support cup 20 in the receiving region 1211 to move, so that the first pushing member 123 can stably push the first support cup 20 in the receiving region 1211 to the support platform 122. Exemplarily, the eighth driving member may drive the fourth blocking member 129 to move up and down or move back and forth in a direction perpendicular to a paper surface, so that the fourth blocking member 129 may move to the other side of the receiving region 1211 along the conveying direction of the first conveying member 121 to block the first support cup 20 from flowing out of the receiving region 1211, to facilitate subsequent pushing by the first pushing member 123, or the fourth blocking member 129 may move out of the other side of the receiving region 1211 along the conveying direction of the first conveying member 121, so that the first support cup 20 may smoothly flow out of the receiving region 1211. The eighth driving member may be a driving component such as an air cylinder and a linear module.

By adopting the technical solution of this embodiment, the first pushing member 123 can stably push the first support cup 20 in the receiving region 1211 to the support platform 122.

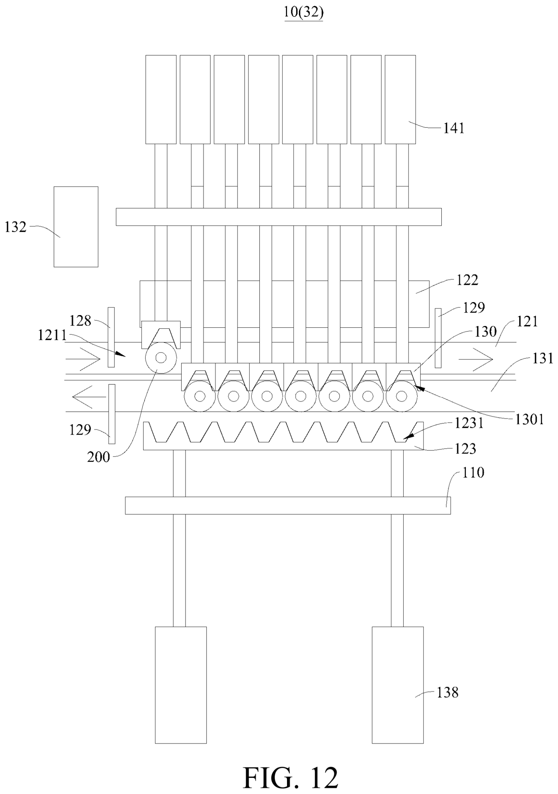

In another embodiment of the present application, as shown in FIG. 2 and FIG. 12 together, the moving mechanism 120 of the provided battery production device 10 further includes a second pushing member 130, the second pushing member 130 can push the first support cup 20 located on the support platform 122 to move in a second direction, and the second direction is from the support platform 122 to the first conveying member 121.

The second pushing member 130 may refer to a member capable of pushing the first support cup 20 of the support platform 122 to move in the second direction; exemplarily, the ninth driving member 141 may drive the second pushing member 130 to move, and the ninth driving member 141 may be used as a driving source of the second pushing member 130, where the ninth driving member 141 may be a driving component such as a cylinder and a linear module. A third slide rail 144 is connected between the second pushing member 130 and the frame 110, and under the guiding action of the third slide rail 144, the second pushing member 130 may accurately and stably push the first support cup 20 to the support platform 122, and there may be a plurality of the third slide rails 144 to increase the guiding stability and reliability, for example, there are two third slide rails 144, and the two third slide rails 144 are respectively located on two opposite sides of the first pushing member 130.

The second direction may refer to a direction from the support platform 122 to the first conveying member 121, that is, the first direction is opposite to the second direction (referring to the direction indicated by the arrow B in FIG. 2), after the production processes such as leakage detection and drying of the battery 200 in the first support cup 20 on the support platform 122 are completed, the second pushing member 130 can push the first support cup 20 of the support platform 122 to the first conveying member 121, and then the first conveying member 121 conveys the first support cup 20 to the subsequent process.

By adopting the technical solution of this embodiment, after the cover body 150 is separated from the first support cup 20, the second pushing member 130 may push the first support cup 20 of the support platform 122 to the first conveying member 121, and the first conveying member 121 moves the first support cup 20 to the subsequent process, so that the actions that the first support cup 20 enters the moving mechanism 120 and moves out of the moving mechanism 120 are both completed by the first conveying member 121, and the entire device is good in structural compactness and convenient to process and manufacture.

In an embodiment, as shown in FIG. 2, a side portion of the second pushing member 130 facing the first conveying member 121 is provided with a third engaging groove 1301 for engaging with the peripheral wall of the first support cup 20.

The third engaging groove 1301 may refer to a groove structure in which the second pushing member 130 is engaged with the peripheral wall of the first support cup 20, and the groove structure is located on one side portion of the second pushing member 130 facing the first conveying member 121. In this way, in a case where the second pushing member 130 moves along the second direction, the first support cup 20 can be engaged into the third engaging groove 1301 and pushed to move to the support platform 122 along with the second pushing member 130, the shape of the third engaging groove 1301 is matched with or the same as the shape of the peripheral wall of the first support cup 20 to better engage with the first support cup 20, thereby stably pushing the first support cup 20 to move; exemplarily, the first support cup 20 is cylindrical, and the shape of the third engaging groove 1301 is a semi-circular groove to more stably push the first support cup 20 to move.

By adopting the technical solution of this embodiment, in the process of pushing the second support cup 20 to move by the second pushing member 130, the first support cup 20 is engaged in the third engaging groove 1301, and the first support cup 20 is limited by the third engaging groove 1301, and may move stably and reliably with the third pushing member 130, and then move to the support platform 122 more stably.

In an embodiment, there are a plurality of third engaging grooves 1301, and the plurality of third engaging grooves 1301 are disposed along the conveying direction of the first conveying member 121 in sequence, so that the second pushing member 130 can simultaneously move the plurality of first support cups 20 from the support platform 122; and exemplarily, there are two or 8 third engaging grooves 1301, and certainly, in other embodiments, there may be one, three, or four or more third engaging grooves 1301.

In another embodiment of the present application, as shown in FIG. 12, the moving mechanism 120 of the provided battery production device 10 further includes a second conveying member 131 and a first detection mechanism 132 for detecting the battery 200, the second conveying member 131 is located on one side of the first conveying member 121 facing away from the support platform 122, and the second pushing member 130 may push the first support cup 20 located on the support platform 122 to the first conveying member 121 or the second conveying member 131 according to a detection result of the first detection mechanism 132.

The second conveying member 131 may refer to a conveying component located on one side of the first conveying member 121 facing away from the support platform 122 and capable of conveying the first support cup 20, and the second conveying member 131 may be a conveyor belt (for example, a flexible conveyor belt), a conveying roller, or the like.

The first detection mechanism 132 may refer to a detection component capable of detecting the battery 200, for example, the first detection mechanism 132 may detect problems such as the shape of the battery 200, the state of the welded seam in the battery 200, the discharging and charging state of the battery 200, and whether the battery 200 leaks; and in addition, the second pushing member 130 may convey the first support cup 20 to the first conveying member 121 or the second conveying member 131 according to the detection result of the first detection mechanism 132, so as to realize the sorting of the battery 200. The first detection mechanism 132 may be a component such as a leakage detection mechanism 137, an image collector, a current detector, and a voltage detector.

By adopting the technical solution of this embodiment, after the cover body 150 is separated from the first support cup 20, the second pushing member 130 may push the first support cup 20 of the support platform 122 to the second conveying member 121 or the first conveying member 131 according to the detection result of the first detection mechanism 132, and the batteries 200 are sorted by means of the first conveying member 131 and the second conveying member 121, so as to facilitate subsequent operations.

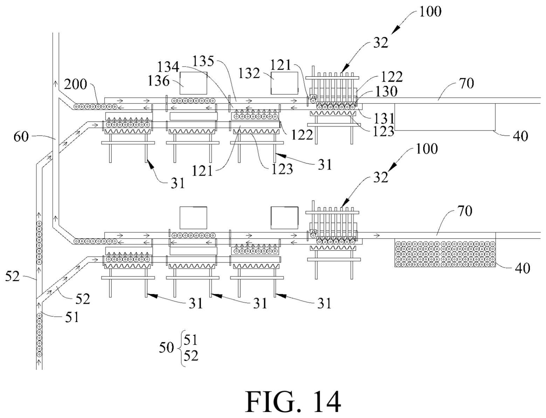

Exemplarily, as shown in FIG. 12 and FIG. 14, the batteries 200 may be classified according to whether the batteries 200 are qualified or unqualified, and in a case where the first detection mechanism 132 detects that the batteries 200 are qualified, the second pushing member 130 pushes the first support cup 20 of the support platform 122 to the second conveying member 131, and the second conveying member 131 conveys the qualified batteries 200 to the discharging conveying member 60; and in a case where the first detection mechanism 132 detects that the batteries 200 are unqualified, the second pushing member 130 pushes the first support cup 20 of the support platform 122 to the first conveying member 121, and the first conveying member 121 conveys the unqualified batteries to the defective product conveying member 70. The conveying direction of the first support cup 20 may refer to the direction indicated by the arrow in FIG. 12 and FIG. 14. Certainly, in other embodiments, the sorting may be performed according to the type of the battery 200, the type of the defect, and the like.

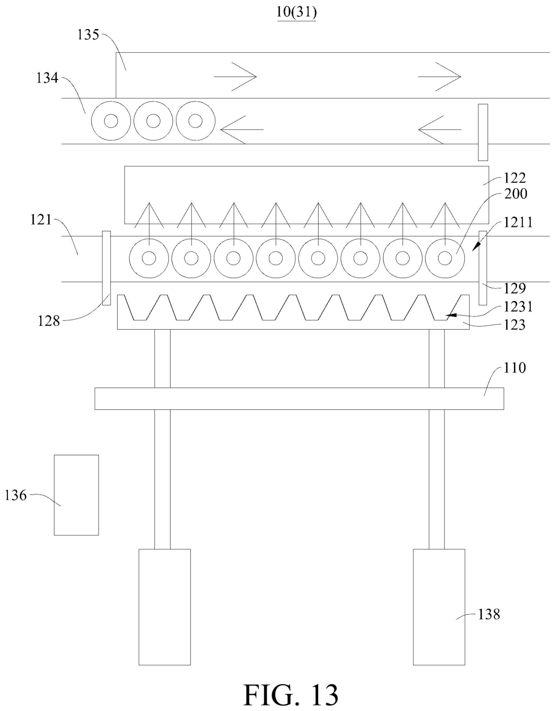

In another embodiment of the present application, as shown in FIG. 13, the moving mechanism 120 of the provided battery production device 10 further includes a third conveying member 134, and the third conveying member 134 is located on one side of the support platform 122 facing away from the first conveying member 121.

The third conveying member 134 may refer to a conveying component located on one side of the support platform 122 facing away from the first conveying member 121 and capable of conveying the first support cup 20, the third conveying member 134 may be a conveyor belt (for example, a flexible conveyor belt), a conveying roller, and the like; and after the cover body 150 is separated from the first support cup 20, the first pushing member 123 may push the first support cup 20 of the support platform 122 to the third conveying member 134, so as to output the first support cup from the moving mechanism 120 through the third conveying member 134.

By adopting the technical solution of this embodiment, the actions that the first support cup 20 enters the first conveying member 121 and the third conveying member 134 are both completed by the first pushing member 123, and the entire device is simple in structure and good in structural compactness, and convenient to manufacture.

In another embodiment of the present application, as shown in FIG. 13, the moving mechanism 120 of the provided battery production device 10 further includes a fourth conveying member 135 and a second detection mechanism 136 for detecting the battery 200, the fourth conveying member 135 is located on one side of the third conveying member 134 facing away from the support platform 122, and the first pushing member 123 may push the first support cup 20 located on the support platform 122 to the third conveying member 134 or the fourth conveying member 135 according to a detection result of the second detection mechanism 136.

The fourth conveying member 135 may refer to a conveying component located on one side of the third conveying member 134 facing away from the support platform 122 and capable of conveying the first support cup 20, and the fourth conveying member 135 may be a conveyor belt (for example, a flexible conveyor belt), a conveying roller, or the like.

The second detection mechanism 136 may refer to a detection component capable of detecting the battery 200, for example, the second detection mechanism 136 may detect problems such as the shape of the battery 200, the state of the welded seam in the battery 200, the discharging and charging state of the battery 200, and whether the battery 200 leaks; and in addition, the first pushing member 123 may convey the first support cup 20 to the third conveying member 134 or the fourth conveying member 135 according to the detection result of the second detection mechanism 136, so as to realize the sorting of the battery 200. The second detection mechanism 136 may be a component such as a leakage detection mechanism 137, an image collector, a current detector, and a voltage detector.

By adopting the technical solution of this embodiment, after the cover body 150 is separated from the first support cup 20, the first pushing member 123 may push the first support cup 20 of the support platform 122 to the third conveying member 134 or the fourth conveying member 135 according to the detection result of the second detection mechanism 136, and the batteries 200 are sorted by means of the third conveying member 134 and the fourth conveying member 135, so as to facilitate subsequent operations.

Exemplarily, as shown in FIG. 13 and FIG. 14, the batteries 200 may be classified according to whether the batteries 200 are qualified or unqualified, and in a case where the second detection mechanism 136 detects that the batteries 200 are qualified, the first pushing member 123 pushes the first support cup 20 of the support platform 122 to the third conveying member 134, and the third conveying member 134 conveys the qualified batteries 200 to the discharging conveying member 60; and in a case where the second detection mechanism 136 detects that the batteries 200 are unqualified, the first pushing member 123 pushes the first support cup 20 of the support platform 122 to the fourth conveying member 135, and the first conveying member 135 conveys the unqualified batteries to the defective product conveying member 70. The conveying direction of the first support cup 20 may refer to the direction indicated by the arrow in FIG. 13 and FIG. 14. Certainly, in other embodiments, the sorting may be performed according to the type of the battery 200, the type of the defect, and the like.

In an embodiment, there are a plurality of second pushing members 130, and the plurality of second pushing members 130 may push the plurality of support cups on the support platform 122 to the corresponding first conveying member 121 and second conveying member 131 according to the classification of the battery 200.

In another embodiment of the present application, at least one of the cover body 150 and the first support cup 20 of the provided battery production device 10 is provided with a heating mechanism for heating the battery 200.

It may be understood that the cover body 150 is provided with a heating mechanism for heating the battery 200; or the first support cup 20 is provided with a heating mechanism for heating the battery 200; or both the cover body 150 and the first support cup 20 are provided with a heating mechanism for heating the battery 200.

The heating mechanism may refer to a member capable of generating heat, and the heating mechanism may be a component capable of heating such as a heating wire and a heating plate.

By adopting the technical solution of this embodiment, the heating mechanism may heat the battery 200, so as to dry the battery 200, and in addition, the heating mechanism may be flexibly arranged, which facilitates processing and manufacturing.

The battery production device 10 in the embodiments of the present application will be described below in conjunction with some embodiments.

### Embodiment 1

As shown in FIGS. 1 to 7, the battery production device 10 includes a frame 110, a moving mechanism 120, and a cover body 150, where the moving mechanism 120 is disposed on the frame 110, the moving mechanism 120 has a first station 1201, two cover bodies 150 are located side by side above the first station 1201, the moving mechanism 120 includes a support platform 122, a first conveying member 121, and a first pushing member 123, the first pushing member 123 and the support platform 122 are respectively located on two opposite sides of the first conveying member 121, the first pushing member 123, driven by the first driving member 138, can move along the first direction (the first direction may refer to a direction from the first conveying member 121 to the support platform 122, exemplarily, refer to the direction indicated by the arrow A in FIG. 2), so as to move the first support cup 20 conveyed on the first conveying member 121 to the support platform 122; a first engaging groove 1231 is formed in a side portion of the first pushing member 123 facing the support platform 122, there are two first engaging grooves 1231, the two first engaging grooves 1231 are spaced apart along a conveying direction of the first conveying member 121 (refer to the direction indicated by the arrow A in FIG. 2), the support platform 122 is provided with a support surface 1221 for supporting the battery 200; the moving mechanism 120 further includes a limiting protrusion 1242, where the limiting member 124 includes the limiting protrusion 1242 protruding from the support surface 1221, the limiting protrusion 1242 and the support platform 122 are of an integrated structure, the support surface 1221 is located in a region between the limiting member 124 and the first conveying member 121 to form an accommodating region 1222 configured to accommodate the first support cup 20, a second engaging groove 1241 is formed in a side portion of the limiting member 124 facing the first conveying member 121, there are two second engaging grooves 1241, the two second engaging grooves 1241 are spaced apart along the conveying direction of the first conveying member 121, the two first engaging grooves 1231 and the two second engaging grooves 1241 are formed in a one-to-one correspondence manner, a second pushing member 130 is disposed on a side of the support platform 122 facing away from the first conveying member 121, the second pushing member 130 can, driven by the ninth driving member 141, move along the second direction (the second direction may refer to a direction from the support platform 122 to the first conveying member 121, exemplarily refer to the direction indicated by the arrow B in FIG. 2), a third engaging groove 1301 is formed in a side portion of the second pushing member 130 facing the support platform 122, there are two third engaging grooves 1301, and the two third engaging grooves 1301 are spaced apart along the conveying direction of the first conveying member 121; and two positioning protrusions 1251 are disposed in the accommodating region 1222, a positioning hole 22 where the positioning protrusion 1251 is inserted is formed in a bottom of the first support cup 20, a third driving member 140 is connected below the support platform 122, and the third driving member 140 drives the support platform 122 to move up and down. The cover body 150 includes a plate portion 152 and a wall portion 153, the wall portion 153 is disposed around the plate portion 152, the wall portion 153 and the plate portion 152 enclose to form the second mounting cavity 151, the battery production device 10 further includes a leakage detection mechanism 137, the leakage detection mechanism 137 includes a vacuumizing component 1371, a gas charging component 1372, and a detection component, the plate portion 152 is connected to the gas charging component 1372, the wall portion 153 is connected to the vacuumizing component 1371, a vacuuming port of the vacuumizing component 1371 is communicated with the second mounting cavity 151, and the detection component is disposed in the vacuumizing component 1371.

A production process of the battery production apparatus 100 in this embodiment is as follows:
1. The first conveying member 121 conveys the first support cup 20 loaded with the battery 200 to the support platform 122;
2. The third driving member 140 drives the support platform 122 to be flush or substantially flush with the conveying surface of the first conveying member 121;
3. The first driving member 138 drives the first pushing member 123 to move, the two first support cups 20 on the first conveying member 121 are engaged into the two first engaging grooves 1231, and with the continuous movement of the first pushing member 123, the two first support cups 20 are pushed into the accommodating region 1222, and the two first support cups 20 are gradually engaged in the two second engaging grooves 1241 for preliminary positioning; and with the continuous movement of the first pushing member 123, the two positioning protrusions 1251 are respectively inserted into the positioning holes 22 of the two first support cups 20, so as to realize the accurate positioning of the first support cups 20.
4. The third driving member 140 drives the support platform 122 to move upward, so that the two cover bodies 150 are respectively seal and cover the two first support cups 20, and the first mounting cavity 21 and the second mounting cavity 151 form a closed space, the battery 200 is located in the closed space, and the gas charging nozzle 13721 of the gas charging component 1372 is communicated with the interior of the battery 200.
5. The air extracting component vacuumizes the closed space, and the gas charging component 1372 charges the helium gas into the battery 200;
6. The detection assembly detects whether there is helium in the closed space;
7. After the detection is completed, the third driving member 140 drives the support platform 122 to move downward, and the cover body 150 is separated from the first support cup 20;
8. When the third driving member 140 drives the support surface 1221 to be substantially flush with the conveying surface of the first conveying member 121, the ninth driving member 141 drives the second pushing member 130 to move, the two first support cups 20 on the support platform 122 are engaged in the two third engaging grooves 1301, and with the continuous movement of the second pushing member 130, the two first support cups 20 are pushed into the first conveying member 121, and the first conveying member 121 conveys the first support cups 20 to the subsequent process.

It should be understood that the size of the serial number of each step in the above embodiments does not mean the order of execution, and the order of execution of each process should be determined by its function and internal logic, and should not constitute any limitation on the implementation process of the embodiments of the present application.

In the battery production device 10 of this embodiment, the battery 200 and the first support cup 20 are conveyed to the accommodating region 1222 through the first pushing member 123, without carrying movement such as separating, turning, and translating the battery 200 and the first support cup 20, so that continuous and high-speed automatic leakage detection may be realized; and the first support cup 20 may be positioned through the cooperation of the positioning protrusion 1251 and the positioning hole 22, so that the first support cup 20, the battery 200 and the gas charging nozzle 13721 have good concentricity, thereby improving the reliability of leakage detection; in addition, the cover body 150 may be fixedly designed relative to the frame 110, so that the first support cup 20 loaded with the battery 200 may flexibly enter and exit the accommodating region 1222; and in addition, the cover body 150 and the first support cup 20 are disposed in a one to-one correspondence manner, which is also beneficial to improving the utilization rate of the cover body 150.

### Embodiment 2

The difference between this embodiment and Embodiment 1 lies in that as shown in FIGS. 8-10, eight first engaging grooves 1231 are formed in a side portion of the first pushing member 123 facing the first conveying member 121, the limiting member 124 includes a limiting portion 1243; the limiting portion 1243 is fixedly disposed, eight second engaging grooves 1241 are formed in a side portion of the limiting portion 1243 facing the first conveying member 121, the eight first engaging grooves 1231 and the eight second engaging grooves 1241 are formed in a one to-one correspondence manner, the support platform 122 is provided with a through hole, the limiting portion 1243 is disposed through the through hole, the third driving member 140 drives the support platform 122 to move up and down, so that the limiting portion 1243 protrudes from the support surface 1221 or moves below the support surface 1221; the first conveying member 121 has a receiving region 1211, and the receiving region 1211 receives eight batteries 200; the battery production apparatus 100 further includes a third blocking member 128 and a fourth blocking member 129, the third blocking member 128 and the fourth blocking member are movable to two sides of the receiving region 1211 along the conveying direction of the first conveying member 121, thereby blocking the first support cups 20 in the receiving region 1211 from flowing, so that the first pushing member 123 can accurately push the eight first support cups 20 in the receiving region 1211 to the support platform 122; the support platform 122 is provided with a through hole 1223, the second driving member 139 may drive the positioning portion 1252 to ascend and descend in the through hole 1223, the second driving member 139 may drive the positioning portion 1252 to move down, so as to retract into the through hole 1223, thereby moving below the support surface 1221; and in addition, the second driving member 139 may drive the positioning portion 1252 to move upward, so that at least part of the positioning portion 1252 protrudes out of the through hole 1223, protrudes out of the support surface 1221 to the upper side, and is inserted into the positioning hole 22, thereby realizing accurate positioning of the first support cup 20.

### Embodiment 3

The difference between the present embodiment and Embodiment 1 lies in that as shown in FIG. 11, the moving mechanism 120 further includes a first blocking member 126 and a second blocking member 127, the first blocking member 126 is movable to a position between the support platform 122 and the first conveying member 121 to block the first support cup 20, and the second blocking member 127 is movable to a side of the first conveying member 121 facing away from the support platform 122 to block the first pushing member 123. The first blocking member 126 moves out between the support platform 122 and the first conveying member 121, and the second blocking member 127 also moves out of the side of the first conveying member 121 facing away from the support platform 122, so that the first pushing member 123 may push the first support cup 20 to move to the support platform 122, thereby completing the charging of the support platform 122; and after the charging of the support platform 122 is completed, the first blocking member 126 moves to the position between the support platform 122 and the first conveying member 121, and the second blocking member 127 also moves to the side of the first conveying member 121 facing away from the support platform 122, thereby blocking the first support cup 20 on the first pushing member 123 and the first conveying member 121.

### Embodiment 4

The difference between this embodiment and Embodiment 2 lies in that as shown in FIG. 12, there are 8 second pushing members 130, each of the second pushing members 130 is connected to the ninth driving member 141, the moving mechanism 120 further includes a second conveying member 131 and a first detection mechanism 132 for detecting the battery 200, the second conveying member 131 is located on one side of the first conveying member 121 facing away from the support platform 122, and the second pushing member 130 may push the first support cup 20 located on the support platform 122 to the first conveying member 121 or the second conveying member 131 according to the detection result of the first detection mechanism 132, so that after the cover body 150 is separated from the first support cup 20, the second pushing member 130 may push the first support cup 20 located on the support platform 122 to the second conveying member 131 or the first conveying member 121 according to the detection result of the first detection mechanism 132, so as to realize the sorting of the battery 200 by means of the first conveying member 121 and the second conveying member 131, so as to facilitate subsequent operations.

### Embodiment 5

The difference between this embodiment and Embodiment 1 lies in that as shown in FIG. 13, the moving mechanism 120 is not provided with the second pushing member 130, the moving mechanism 120 further includes a third conveying member 134, a fourth conveying member 135, and a second detection mechanism 136 for detecting the battery 200, the third conveying member 134 is located on one side of the support platform 122 facing away from the first conveying member 121, the fourth conveying member 135 is located on one side of the third conveying member 134 facing away from the support platform 122, and the first pushing member 123 may push the first support cup 20 located on the support platform 122 to the third conveying member 134 or the fourth conveying member 135 according to the detection result of the second detection mechanism 136, so that after the cover body 150 is separated from the first support cup 20, the first pushing member 123 may push the first support cup 20 located on the support platform 122 to the third conveying member 134 or the fourth conveying member 135 according to the detection result of the second detection mechanism 136, so as to realize the sorting of the battery 200 by means of the third conveying member 134 and the fourth conveying member 135, and the second pushing member 130 may push the first support cup 20 located on the support platform 122 to the first conveying member 121 or the second conveying member 131 according to the detection result of the first detection mechanism 132. Subsequent operations are facilitated.

In another embodiment of the present application, as shown in FIGS. 12-14 together, a battery production apparatus 100 is provided. The battery production apparatus 100 includes a first battery production device 31 and a second battery production device 32, where the first battery production device 31 includes the above battery production device 10, and the second battery production device 32 includes the above battery production device 10; the fourth conveying member 135 of the first battery production device 31 is connected to the first conveying member 121 of the second battery production device 32, so that the first support cup 20 located on the fourth conveying member 135 of the first battery production device 31 is capable of being conveyed to the first conveying member 121 of the second battery production device 32; and the third conveying member 134 of the first battery production device 31 is connected to the second conveying member 131 of the second battery production device 32, so that the first support cup 20 located on the second conveying member 131 of the second battery production device 32 is capable of being conveyed to the third conveying member 134 of the first battery production device 31.

It may be understood that the battery production apparatus 100 includes at least two battery production devices 10 described above, at least one of the battery production devices 10 is a first battery production device 31, and the others are second battery production devices 32. The first battery production device 31 adopts the structure of the above Embodiment 5, and the second battery production device 32 adopts the structure of the above Embodiment 4. In the actual use process, after the batteries 200 are sorted by the first battery production device 31, different first support cups 20 are respectively pushed to the third conveying member 134 and the fourth conveying member 135 in the second battery production device 32, where the first support cup 20 pushed to the third conveying member 134 may be conveyed to the discharging conveying member 60, and the first support cup 20 pushed to the fourth conveying member 135 may be conveyed to the first conveying member 121 of the second battery production device 32; and then after re-detection by the second detection mechanism 136 of the second battery production device 32, the second battery production device 32 pushes the first support cup 20 into the first conveying member 121 and the second conveying member 131 in the second battery production device 32 according to the re-detection result, where the first support cup 20 pushed to the first conveying member 121 in the second battery production device 32 is conveyed to the defective product conveying member 70, and the first support cup 20 pushed to the second conveying member 131 in the second battery production device 32 is conveyed to the third conveying member 134 and then conveyed to the discharging conveying member 60 through the third conveying member 134.

Through the technical solution of this embodiment, the design of the first battery production device 31 and the second battery production device 32 may realize the sorting of the batteries 200 and the re-detection of the sorting result, thereby improving the accuracy of the sorting of the batteries 200.

In another embodiment of the present application, as shown in FIGS. 12-14 together, the provided battery production apparatus 100 includes a plurality of first battery production devices 31 arranged in sequence, and the first conveying members 121 of the first battery production devices 31 are connected in sequence; the third conveying members 134 of the first battery production devices 31 are connected in sequence, and the fourth conveying members 135 of the first battery production devices 31 are connected in sequence; the last fourth conveying member 135 is connected to the first conveying member 121 of the second battery production device 32; and the last third conveying member 134 is connected to the second conveying member 131 of the second battery production device 32.

It may be understood that there are a plurality of first battery production devices 31, the first conveying members 121 of the first battery production devices 31 are connected in sequence, and the first support cup 20 loaded with the battery 200 flowing from the charging conveying member 50 may enter the first conveying members 121 of the first battery production devices 31, thereby meeting the production needs of the plurality of batteries 200; the third conveying members 134 of the first battery production devices 31 are connected in sequence, the fourth conveying members 135 of the first battery production devices 31 are connected in sequence, the last fourth conveying member 135 is connected to the first conveying member 121 of the second battery production device 32, and the last third conveying member 134 is connected to the second conveying member 131 of the second battery production device 32; it may be understood that, according to the detection result of the first detection mechanism 132, the first support cup 20 conveyed by the third conveying member 134 of each of the first battery production devices 31 can be conveyed to the discharging conveying member 60, and the first support cup 20 conveyed by the third conveying member 134 of each of the first battery production devices 31 can be conveyed to the second battery production device 32 for re-detection.

By adopting the technical solution of this embodiment, the production requirements of a plurality of batteries 200 may be met, and the plurality of first battery production devices 31 are arranged in sequence and connected, so that the entire battery production apparatus 100 is simple in structure and easy to manufacture, which is also beneficial to reducing the manufacturing cost and improving the production efficiency.

In another embodiment of the present application, as shown in FIG. 14, the provided battery production apparatus 100 further includes a buffer mechanism 40, and the buffer mechanism 40 is used for buffering the battery 200 conveyed by the first conveying member 121 of the second battery production device 32.

The buffer mechanism 40 may refer to buffering the batteries 200 conveyed by the first conveying member 121 of the second battery production device 32, and the buffer mechanism 40 may be a battery buffer frame, a battery buffer box, or the like; exemplarily, the buffer mechanism 40 may also be a part of a region on the defective product conveying member 70.

By adopting the technical solution of this embodiment, the batteries 200 conveyed by the first conveying member 121 of the second battery 200 device are buffered in a centralized manner by the buffer mechanism 40, so as to facilitate subsequent centralized removal.

The battery production device 10 in the embodiments of the present application will be described below in conjunction with some embodiments.

### Embodiment 6

In this embodiment, as shown in FIG. 14, the battery production device 100 includes three first battery production devices 100 and one second battery production device 32; the three first battery production devices 31 are arranged in sequence from left to right, the second battery production device 32 is located on the right side of the rightmost first battery production device 31, the first conveying members 121 of the first battery production devices 31 are connected in sequence from left to right, the third conveying members 134 of the first battery production devices 31 are connected in sequence from left to right, the fourth conveying members 135 of the first battery production devices 31 are connected in sequence from left to right, the rightmost fourth conveying member 135 is connected to the first conveying member 121 of the second battery production device 32, the rightmost third conveying member 134 is connected to the second conveying member 131 of the second battery production device 32, the defective product conveying member 70 is connected to the right side of the first conveying member 121 of the second battery production device 32, the buffer mechanism 40 is disposed in a part of region protruding on the lower side of the defective product conveying member 70, and the three first battery production devices 31 share one second detection mechanism 136; there are two battery production apparatuses 100, the two battery production apparatuses 100 are arranged in parallel up and down, the first conveying members 121 of the two battery production apparatuses 100 located in the leftmost first battery production device 31 are both connected to the charging conveying member 50, and the third conveying members 134 of the two battery production apparatuses 100 located on the leftmost first battery production device 31 are both connected to the discharging conveying member 60.

A working process of the battery production apparatus 100 in this embodiment is as follows:
The first support cup 20 loaded with the battery 200 is conveyed to the first conveying member 121 of each of the first battery production devices 31 along the upper charging conveying member 50, where for convenience of description, taking the leakage detection of the first battery production device 31 on the lower left side as an example, the first pushing member 123 in the first battery production device 31 pushes the first support cup 20 on the first conveying member 121 to the support platform 122, the cover body 150 seals and covers the first support cup 20, the second detection mechanism 136 detects whether there is a leakage in the battery 200; in a case that the second detection mechanism 136 detects that there is no leakage point in the battery 200, after the cover body 150 is separated from the first support cup 20, the first pushing member 123 pushes the first support cup 20 to the third conveying member 134, the first support cup 20 is conveyed to the discharging conveying member 60 under the conveyance of the third conveying member 134, the discharging conveying member 60 conveys the first support cup 20 to the subsequent process; in a case that the second detection mechanism 136 detects that there is a leakage point in the battery 200, after the cover body 150 is separated from the first support cup 20, the first pushing member 123 pushes the first support cup 20 to the fourth conveying member 135, the first support cup 20 is conveyed to the first conveying member 121 of the second battery production device 32 under the conveyance of the fourth conveying member 135, after the first support cup 20 pushed by the first pushing member 123 in the second battery production device 32 enters the support platform 122 in the second battery production device 32, the cover body 150 of the second battery production device 32 seals and covers the first support cup 20, and the first detection mechanism 132 performs re-detection on the battery 200; in a case that it is re-detected that there is no leakage point in the battery 200, after the cover body 150 is separated from the first support cup 20, the second pushing member 130 pushes the first support cup 20 to the first conveying member 121 in the second battery production device 32, the first support cup 20 is conveyed to the third conveying member 134 of the first battery production device 31 under the convenience of the first conveying member 121 in the second battery production device 32, and the first support cup 20 is conveyed to the discharging conveying member 60 under the conveyance of the third conveying member 134; the discharging conveying member 60 conveys the first support cup 20 to the subsequent steps; and it is re-detected that there is a leakage point in the battery 200, after the cover body 150 is separated from the first support cup 20, the second pushing member 130 pushes the first support cup 20 to the second conveying member 131, the first support cup 20 is conveyed to the defective product conveying member 70 under the conveyance of the second conveying member 131, the first discharging conveying member 60 conveys the first support cup 20 to the buffer mechanism 40, and the first support cup 20 is finally buffered by the buffer mechanism 40.

As shown in FIG. 14, it is a schematic diagram of the battery production apparatus 100 in this embodiment, the charging conveyor 50 includes a main conveying member 51 and a branch conveying member 52, the main conveying member 51 is a main logistics line for an incoming material, the first support cup 20 carries the battery 200 and enters from the main logistics line, the branch conveying member 52 is a branch logistics line for the incoming material, and the first support cup 20 is divided in the branch logistics line, so as to enter different first battery production apparatuses 100. In the first battery production device 31, the position of the support platform 122 may be a main helium inspection station (i.e., the first station 1201) for detecting the leakage rate of the battery 200, the first pushing member 123 is used for pushing the first support cup 20 to the main helium inspection station, after the second detection mechanism 136 detects the battery 200, in a case that it is detected that there is no leakage point in the battery 200, the first pushing member 123 pushes the first support cup 20 to the third conveying member 134 and conveys the first support cup to the discharging conveying member 60 (i.e., the discharging logistics line) via the third conveying member 134, and in a case that it is detected that there is a leakage point in the battery 200, the first pushing member 123 pushes the first support cup 20 to the fourth conveying member 135 and conveys the first support cup to the first conveying member 121 of the second battery production device 32 via the fourth conveying member 135. In the second battery production device 32, the first detection mechanism 132 is a helium detector for re-detection, and is used for re-detecting the battery 200 conveyed by the fourth conveying member 135, and in a case that there is a leakage point in the re-detected battery 200, the second pushing member 130 pushes the first support cup 20 to enter the first conveying member 121 and convey the first support cup to the defective product conveying member 70 via the first conveying member 121, the defective product conveying member 70 conveys the first support cup 20 to the buffer mechanism 40, and finally the first support cup 20 is buffered by the buffer mechanism 40.

As shown in FIG. 11, it is a schematic structural diagram of the first conveying member 121, the first blocking member 126, and the second blocking member 127, the first blocking member 126 and the second blocking member 127 are respectively disposed on two opposite sides of the first conveying member 121, and the third blocking member 128 and the fourth blocking member 129 may ascend and descend up and down.

As shown in FIG. 13, it is a schematic structural diagram of the first battery production device 31. The state shown in FIG. 13 is a to-be-loaded state. As shown in FIG. 9, the first battery production device 31 may further include a code scanning mechanism. After the code scanning mechanism identifies a barcode of the battery 200, the first driving member 138 pushes the first pushing member 123 to move, and the first support cup 20 is engaged in the first engaging groove 1231 for preliminarily position the first support cup 20, so that the first support cup 20 does not move back and forth, and the first support cup 20 can be stably pushed into the support platform 122. As shown in FIG. 8 and FIG. 10 together, with the continuous movement of the first pushing member 123, the first support cup 20 is engaged in the second engaging groove 1241, and the positioning portion 1252 is inserted into the positioning hole 22 of the first support cup 20, so that the positioning accuracy of the first support cup 20 is higher, and the wear-resistant layer 23 is embedded onto the inner wall of the positioning hole 22 for improving the wear resistance, and cooperates with a positioning pin, so that the positioning accuracy of the support cup is higher.

In the whole charging and discharging process of the main helium detection station, the fourth blocking member 129 moves to the side of the receiving region 1211, the fourth blocking member 129 blocks the first support cup 20 from flowing out of the receiving region 1211, after the first support cup 20 in the receiving region 1211 reaches a certain quantity, the third blocking member 128 moves to the other side of the receiving region 1211 to block continuous charging in block the receiving region 1211, the first blocking member 126 and the second blocking member 127 descend, the first pushing member 123 pushes the first support cup 20 in the receiving region 1211 to the support platform 122 to return, the second blocking member 127 ascends, at this time, the fourth blocking member 129 and the third blocking member 128 move out of the side of the receiving region 1211, and the first support cup 20 returns to the first battery production device 31 behind; the positioning portion 1252 ascends and is inserted into the positioning hole 22 of the first support cup 20, the support platform 122 ascends, and the upper end of the first support cup 20 is in contact with the sealing ring at the lower end of the cover body 150 to form a closed space; the second detection mechanism 136 performs vacuumizing and helium detection on the sealed space, after helium detection is completed, the support platform 122 descends, so that the first support cup 20 is separated from the cover body 150, the support platform 122 descends to a position flush with the upper surface of the limiting portion 1243, the positioning portion 1252 descends, the third blocking member 128 moves to the side of the receiving region 1211 to block the first support cup 20 from entering the receiving region 1211; when there is no first support cup 20 in front of the first pushing member 123, after the first pushing member 123 pushes the first support cup 20 of the main helium detection station into the third conveying member 134 or the fourth conveying member 135, the first pushing member 123 returns, the support platform 122 descends to a position at the same height as the conveying surface of the first conveying member 121, to enter the next cycle, and the subsequent stations are similarly performed according to this flow.

As shown in FIG. 12, it is a schematic structural diagram of the second battery production device 32. The discharging process of the second battery production device 32 is consistent with the main helium inspection station, and in the discharging process of the second battery production device 32, the first detection mechanism 132 performs separate detection on each battery 200 on the support platform 122; there are a plurality of second pushing members 130, the plurality of second pushing members 130 are in one to-one correspondence with the first support cups 20 in the receiving region 1211, and respectively push the first support cups into the corresponding first conveying member 121 and second conveying member 131 according to the re-detection result of the first detection mechanism 132; in a case that there is no leakage point in the re-detected battery 200, the battery 200 is conveyed from the second conveying member 131 to the third conveying member 134 and conveyed to the discharging conveying member 60 through the third conveying member 134; and in a case that there is a leakage point in the re-detected battery 200, the battery 200 is conveyed from the first conveying member 121 to the defective product conveying member 70, and finally flows into the buffer mechanism 40 for buffering, and the batteries 200 are manually collected and taken away subsequently.

In the battery production apparatus 100 in this embodiment, the charging and discharging manners of the first support cup 20 are changed, so that the mechanism action is more concise, the number of the batteries 200 transferred at one time is higher, and the efficiency is higher; in addition, the price of the first pushing member 123 is cheaper than that of the manipulator, and the first mounting cavity 21 in the first support cup 20 is used as a part of the closed space, the closed space may be set to be smaller, the vacuumizing time will be shorter, and the helium detection efficiency is further improved.

The first support cup 20 is made of wear-resistant plastic parts such as PP, PE, and Teflon. The first support cup 20 can carry the battery 200, and the battery 200 may also be carried on the conveying member for transferring, the first support cup 20 enters the main helium detection station, the first support cup 20 is lifted up to be in contact with the sealing ring of the cover body 150, and the sealing ring is pressed by a certain pressure to form a seal with the cover body 150, so as to provide a vacuum environment for helium detection of the battery 200, and the support platform 122 descends after helium detection is completed; the structure for transferring the first support cup 20 is the first pushing member 123, and the first pushing member 123 only moves forward and backward, so that the action is simple; and the first support cup 20 is pushed into the third conveying member 134 and the fourth conveying member 135 by the first pushing member 123, that is, the discharging conveying member 60 may be completed by the first pushing member 123, which may save space and mechanism. At the main helium detection station, a plurality of batteries 200 may be detected at one time, and all the main helium detection stations are detected by one second detection mechanism 136 (i.e., a helium detector), so that a plurality of main helium detection stations may be set, the resource of the helium detector may be fully utilized, and the number of stations may be set according to the beat in a fit manner. According to the charging speed and production capacity requirements, a plurality of branch conveying members 52 may be set, and one branch conveying member 52 corresponds to one battery production device 100.

In another embodiment of the present application, as shown in FIGS. 12-14 together, a battery production method is provided, and the battery production method includes:
battery 200 loading: a battery 200 is placed in a first mounting cavity 21 of a first support cup 20;
battery 200 moving: a moving mechanism 120 of a battery production device 10 moves the first support cup 20 to a first station 1201; and
first mounting cavity 21 sealing: the first support cup 20 is covered with a cover body 150 of the battery production device 10, so as to seal the first mounting cavity 21.

In the battery production method in the embodiment of the present application, the battery 200 is first placed in the first mounting cavity 21 of the first support cup 20, then the first support cup 20 is moved to the first station 1201 by the movement of the battery production device 10, and finally, the cover body 150 of the battery production device 10 seals and covers the first support cup 20, so as to seal the first mounting cavity 21, and thus the battery 200 is placed in the sealed first mounting cavity 21, that is, the battery 200 is in the closed space; and in the battery production method, the moving mechanism 120 does not need to take the battery 200 out of the support cup, which reduces the movement of a mechanism, simplifies the operating action, is beneficial to increasing the production efficiency of the battery 200, and is then beneficial to meeting the high-speed manufacturing requirements of the battery 200.

In the actual production process of the battery 200, the battery 200 will pass through many production mechanisms, and the structures of the production mechanisms are different or the processed components of the battery 200 are different, so that the support cup carrying the battery 200 will have different structural forms.

In another embodiment of the present application, the battery production method is provided, including: before the battery 200 is loaded, the battery 200 is placed in a second cup, and a first cup changing device moves the battery 200 located in the second cup to the first mounting cavity 21 of the first support cup 20, and/or, after the first mounting cavity 21 is sealed, the cover body 150 is separated from the first support cup 20, and the second cup changing device moves the battery 200 located in the first support cup 20 to the third support cup.

It may be understood that before the battery 200 is loaded, the battery 200 is placed in the second cup, and the first cup changing device moves the battery 200 located in the second cup into the first mounting cavity 21 of the first support cup 20, or after the first mounting cavity 21 is sealed, the cover body 150 is separated from the first support cup 20, and the second cup changing device moves the battery 200 located in the first support cup 20 into the third cup, or before the battery 200 is loaded, the battery 200 is placed in the second support cup, and the first cup changing device moves the battery 200 in the second support cup into the first cavity 21 of the first support cup 20; and after the first mounting cavity 21 is sealed, the cover body 150 is separated from the first support cup 20, and the second cup changing device may also move the battery 200 located in the first support cup 20 into the third cup.

Before the battery 200 is loaded, the battery 200 is placed in the second cup, and the first cup changing device moves the battery 200 located in the second cup into the first mounting cavity 21 of the first support cup 20; it may be understood that, before the battery 200 is loaded, the battery 200 is loaded in the second cup, and the second cup is difficult to be applied to the battery production device 10, the battery 200 in the second cup is taken out by the first cup changing device, and the battery 200 taken out is placed in the first support cup 20, thereby better meeting the requirements of the battery production device 10, where the second cup may refer to a component capable of carrying the battery 200.

After the first mounting cavity 21 is sealed, the cover body 150 is separated from the first support cup 20, and the second cup changing device moves the battery 200 located on the first support cup 20 to the third cup; it may be understood that, after the battery production device 10 completes the production of the battery 200, the battery 200 enters the subsequent processes, the first support cup 20 is difficult to be applied to the subsequent production mechanism, the battery 200 in the first support cup 20 is taken out by the second cup replacing device, and the battery 200 taken out is placed in the third cup, thereby better meeting the requirements of the subsequent production mechanism, where the third cup may refer to a component capable of carrying the battery 200.

By adopting the technical solution of this embodiment, most of the production process requirements in the battery 200 production process can be better met through the cup changing action, which is beneficial to improving the production efficiency of the battery 200.

In another embodiment of the present application, as shown in FIG. 1 and FIG. 2 together, the battery production method is provided: the moving mechanism 120 includes a first conveying member 121, a support platform 122, and a first pushing member 123, where the support platform 122 is located at the first station 1201, and battery 200 moving specifically includes: the first conveying member 121 conveys the first support cup 20 loaded with the battery 200 to the support platform 122, and the first pushing member 123 pushes the first support cup 20 to the support platform 122.

By adopting the technical solution of this embodiment, the first conveying member 121 supports the first support cup 20 loaded with the battery 200 at a support platform 122, then the first pushing member 123 pushes the first support cup 20 on the first conveying member 121 to the support platform 122, and then the cover body 150 seals and covers the first support cup 20, where the battery 200, pushed by the first pushing member 123, may be moved from the first conveying member 121 to the support platform 122, the movement action of the battery 200 is simple and the production efficiency is high; in addition, the movement action is simple, the debugging is simple and the debugging efficiency is high, and the structure of the entire device is simple, which is more beneficial to improving the production efficiency; moreover, a plurality of first support cups 20 may be simultaneously pushed to move by the first pushing member 123, which is beneficial to reducing the manufacturing cost.

In another embodiment of the present application, as shown in FIG. 12, the battery production method is provided. The moving mechanism 120 further includes a second pushing member 130, a second conveying member 131, and a first detection mechanism 132;
after the cover body 150 covers the first support cup 20, the first detection mechanism 132 detects the battery 200 in the first support cup 20.

In the case that the first detection mechanism 132 detects that the battery 200 in the first support cup 20 is qualified, after the cover body 150 is separated from the first support cup 20, the second pushing member 130 pushes the first support cup 20 located on the support platform 122 to the second conveying member 131.

In the case that the first detection mechanism 132 detects that the battery 200 in the first support cup 20 is unqualified, after the cover body 150 is separated from the first support cup 20, the second pushing member 130 pushes the first support cup 20 of the support platform 122 to the first conveying member 121.

By adopting the technical solution of this embodiment, after the cover body 150 and the first support cup 20 are separated, the second pushing member 130 can push the first support cup 20 of the support platform 122 to the second conveying member 121 or the first conveying member 131 according to the detection result of the first detection mechanism 132, and the sorting of qualified batteries and unqualified batteries is realized through the first conveying member 131 and the second conveying member 121, so as to facilitate subsequent operations.

In another embodiment of the present application, as shown in FIG. 13, the battery production method is provided. The moving mechanism 120 further includes a third conveying member 134, a fourth conveying member 135, and a second detection mechanism 136;
after the cover body 150 covers the first support cup 20, the second detection mechanism 136 detects the battery 200 in the first support cup 20;
in a case where the second detection mechanism 136 detects that the battery 200 in the first support cup 20 is qualified, after the cover body 150 is separated from the first support cup 20, the first pushing member 123 is used for pushing the first support cup 20 located on the support platform 122 to the third conveying member 134;
in a case where the second detection mechanism 136 detects that the battery 200 in the first support cup 20 is unqualified, after the cover body 150 is separated from the first support cup 20, the first pushing member 123 pushes the first support cup 20 of the support platform 122 to the fourth conveying member 135.

By adopting the technical solution of this embodiment, after the cover body 150 is separated from the first support cup 20, the first pushing member 123 may push the first support cup 20 of the support platform 122 to the third conveying member 134 or the fourth conveying member 135 according to the detection result of the second detection mechanism 136, and the qualified and unqualified batteries are sorted by means of the third conveying member 134 and the fourth conveying member 135, so as to facilitate subsequent operations.

In another embodiment of the present application, as shown in FIGS. 12-14 together, the battery production method is provided. The battery production device 10 includes a first battery production device 31 and a second battery production device 32;
the battery 200 moving specifically includes: the moving mechanism 120 of the first battery production device 31 moves the first support cup 20 of the first battery production device 31, to the first station 1201;
the first mounting cavity 21 sealing specifically includes: the first support cup 20 of the first battery production device 31 is covered with the cover body 150 of the first battery production device 31, so that the first mounting cavity 21 of the first support cup 20 of the first battery production device 31 is sealed;
after the first mounting cavity 21 is sealed, the first battery production device 31 detects the battery 200 loaded in the first support cup 20 of the first battery production device 31;
in a case that the first battery production device 31 detects that the battery 200 is qualified, after the cover body 150 of the first battery production device 31 is separated from the first support cup 20 of the first battery production device 31, the first battery production device 31 outputs the first support cup 20 of the first battery production device 31 to an discharging conveying member 60; and
in a case that the first battery production device 31 detects that the battery 200 is unqualified, after the cover body 150 of the first battery production device 31 is separated from the first support cup 20 of the first battery production device 31, the first battery production device 31 conveys the first support cup 20 of the first battery production device 31 to the second battery production device 32;
the second battery production device 32 re-detects the battery 200 in the first support cup 20 conveyed by the first battery production device 31;
in a case that the second battery production device 32 detects that the battery 200 is qualified, the second battery production device 32 conveys the first support cup 20 into the first battery production device 31 and conveys the first support cup to the discharging conveying member 60 via the first battery production device 31;
in a case that the second battery production device 32 detects that the battery 200 is defective, the second battery production device 32 conveys the first support cup 20 to the defective product conveying member 70.

By adopting the technical solution of this embodiment, after the first battery production device 31 detects the battery 200, the second battery production device 32 performs re-detection for the unqualified battery 200, which is beneficial to improving the detection accuracy of the battery 200.

Description will be made below in conjunction with some specific embodiments.

The first support cup 20 loaded with the battery 200 is conveyed to the first conveying member 121 of each of the first battery production devices 31 along the charging conveying member 50, where for the convenience of description, taking the leakage detection of the first battery production device 31 on the lower left side as an example, the first pushing member 123 in the first battery production device 31 pushes the first support cup 20 on the first conveying member 121 to the support platform 122, the cover body 150 seals and covers the first support cup 20, the second detection mechanism 136 detects whether there is a leakage in the battery 200; in a case that the second detection mechanism 136 detects that there is no leakage point in the battery 200, after the cover body 150 is separated from the first support cup 20, the first pushing member 123 pushes the first support cup 20 to the third conveying member 134, and the first support cup 20 is conveyed to the discharging conveying member 60 under the conveyance of the third conveying member 134, and the discharging conveying member 60 conveys the first support cup 20 to the subsequent steps; in a case that the second detection mechanism 136 detects that there is a leakage point in the battery 200, after the cover body 150 is separated from the first support cup 20, the first pushing member 123 pushes the first support cup 20 to the fourth conveying member 135, the first support cup is conveyed to the first conveying member 121 of the second battery production device 32 under the conveyance of the fourth conveying member 135, after the first support cup 20 pushed by the first pushing member 123 in the second battery production device 32 enters the support platform 122 in the second battery production device 32, the cover body 150 of the second battery production device 32 seals and covers the first support cup 20, and the first detection mechanism 132 performs re-detection on the battery 200; in a case that it is re-detected that there is no leakage point in the battery 200, after the cover body 150 is separated from the first support cup 20, the second pushing member 130 pushes the first support cup 20 to the first conveying member 121 of the second battery production device 32, the first support cup 20 is conveyed into the third conveying member 134 of the first battery production device 31 under the convenience of the first conveying member 121, and the first support cup 20 is conveyed to the discharging conveying member 60 under the conveyance of the third conveying member 134; the discharging conveying member 60 conveys the first support cup 20 to the subsequent steps; and it is re-detected that there is a leakage point in the battery 200, after the cover body 150 is separated from the first support cup 20, the second pushing member 130 pushes the first support cup 20 to the second conveying member 131, the first support cup 20 is conveyed to the defective product conveying member 70 under the conveyance of the second conveying member 131, the defective product conveying member 70 conveys the first support cup 20 to the buffer mechanism 40, the first support cup 20 is finally buffered by the buffer mechanism 40, and the battery 200 is manually taken away subsequently.

The above descriptions of the various embodiments tend to emphasize differences between the various embodiments. For same or similar parts thereof, refer to these embodiments. For brevity, details are not described herein again.

The above are only the preferred embodiments of the present application and are not intended to limit the present application. Any modifications, equivalent replacements, improvements, etc. made within the spirit and principles of the present application shall be included in the scope of protection of the present application.

## Claims

1. A battery production device, comprising:
a frame;
a moving mechanism, connected to the frame, the moving mechanism having a first station, the moving mechanism being used for moving a first support cup to the first station, and the first support cup having a first mounting cavity configured to receive a battery therein; and
a cover body, used for sealing and covering the first support cup located at the first station, so as to seal the first mounting cavity.

2. The battery production device according to claim 1, wherein the battery production device further comprises a sealing member, and the cover body is hermetically connected to the first support cup by the sealing member.

3. The battery production device according to claim 2, wherein the sealing member comprises at least one of a sealing ring and a sealant.

4. The battery production device according to any one of claims 1 to 3, wherein the cover body is provided with a second mounting cavity, and in a case that the cover body covers the first support cup, the first mounting cavity is communicated with the second mounting cavity and forms a closed space configured to receive the battery therein.

5. The battery production device according to claim 4, wherein the cover body comprises a plate portion and a wall portion that are connected to each other, the wall portion is annularly disposed around the plate portion, the wall portion and the plate portion enclose to form the second mounting cavity, and an end of the wall portion facing away from the plate portion is used for sealing and covering the first support cup.

6. The battery production device according to any one of claims 1 to 5, wherein an avoidance groove for avoiding a welded seam at a bottom of the battery is configured in a cavity bottom wall of the first mounting cavity.

7. The battery production device according to claim 6, wherein a support protrusion for supporting the battery is configured at the cavity bottom wall of the first mounting cavity, and the avoidance groove is formed between a side wall surface of the support protrusion proximal to a peripheral wall of the mounting cavity and the peripheral wall of the mounting cavity.

8. The battery production device according to claim 7, wherein the support protrusion comprises an annular protrusion, the annular protrusion encloses to form an inner hole, the avoidance groove is formed between an outer peripheral wall of the annular protrusion and the peripheral wall of the first mounting cavity, and the annular protrusion is provided with a communication structure for communicating the avoidance groove with the inner hole.

9. The battery production device according to any one of claims 1 to 8, wherein the cover body is movable toward the first station, so that the cover body seals and covers the first support cup located at the first station.

10. The battery production device according to any one of claims 1 to 9, wherein the moving mechanism comprises a first conveying member, a support platform, and a first pushing member that are connected to the frame, the first conveying member is used for conveying the first support cup, the support platform is disposed on one side of the first conveying member, the support platform is located at the first station, the first pushing member is capable of pushing the first support cup located on the first conveying member to move along a first direction, and the first direction is a direction from the first conveying member to the support platform.

11. The battery production device according to claim 10, wherein a side portion of the first pushing member facing the support platform is provided with a first engaging groove for engaging with a peripheral wall of the first support cup.

12. The battery production device according to claim 10 or 11, wherein the support platform is provided with a support surface for supporting the battery, the moving mechanism further comprises a limiting member, and the limiting member is used for protruding from the support surface, so that a region of the support surface located between the limiting member and the first conveying member forms an accommodating region configured to accommodate the first support cup.

13. The battery production device according to claim 12, wherein a second engaging groove is formed in a side portion of the limiting member facing the first conveying member, and the second engaging groove is used for engaging with the peripheral wall of the first support cup.

14. The battery production device according to claim 12 or 13, wherein the limiting member comprises a limiting protrusion protruding from the support surface, and/or the limiting member comprises a limiting portion, and the limiting portion is movable relative to the support platform to protrude from the support surface.

15. The battery production device according to any one of claims 10 to 14, wherein the support platform is provided with a support surface for supporting the battery and a positioning member capable of protruding from the support surface, and a positioning hole where the positioning member is inserted is formed in a bottom of the first support cup.

16. The battery production device according to claim 15, wherein the positioning member comprises a positioning protrusion protruding from the support surface, and/or the positioning member comprises a positioning portion, the support platform is provided with a through hole penetrating the support surface, and the positioning portion is used for moving in the through hole to protrude from the support surface.

17. The battery production device according to claim 15 or 16, wherein a wear-resistant layer is disposed on an inner wall of the positioning hole.

18. The battery production device according to any one of claims 10 to 17, wherein the support platform is movable toward the cover body, so that the cover body seals and covers the first support cup located on the support platform.

19. The battery production device according to any one of claims 10 to 18, wherein the moving mechanism further comprises a first blocking member, the first blocking member is movable between the support platform and the first conveying member to block the first support cup, and/or the moving mechanism further comprises a second blocking member, and the second blocking member is movable to a side of the first conveying member facing away from the support platform to block the first pushing member.

20. The battery production device according to any one of claims 10 to 19, wherein the first conveying member is configured with a receiving region configured to receive the first support cup, and the receiving region and the support platform are distributed along the first direction; and the moving mechanism further comprises a third blocking member for blocking the first support cup from flowing into the receiving region, and/or the moving mechanism further comprises a fourth blocking member for blocking the first support cup from flowing out of the receiving region.

21. The battery production device according to any one of claims 10 to 20, wherein the moving mechanism further comprises a second pushing member, the second pushing member is capable of pushing the first support cup located on the support platform to move along a second direction, and the second direction is from the support platform to the first conveying member.

22. The battery production device according to claim 21, wherein the moving mechanism further comprises a second conveying member and a first detection mechanism for detecting the battery, the second conveying member is located on one side of the first conveying member facing away from the support platform, and the second pushing member is capable of pushing the first support cup located on the support platform to the first conveying member or the second conveying member according to a detection result of the first detection mechanism.

23. The battery production device according to any one of claims 10 to 20, wherein the moving mechanism further comprises a third conveying member, and the third conveying member is located on one side of the support platform facing away from the first conveying member.

24. The battery production device according to claim 23, wherein the moving mechanism further comprises a fourth conveying member and a second detection mechanism for detecting the battery, the fourth conveying member is located on one side of the third conveying member facing away from the support platform, and the first pushing member is capable of pushing the first support cup located on the support platform to the third conveying member or the fourth conveying member according to a detection result of the second detection mechanism.

25. The battery production device according to any one of claims 1 to 24, wherein the battery production device further comprises a leakage detection mechanism for detecting a leakage of the battery.

26. The battery production device according to claim 25, wherein the leakage detection mechanism comprises a vacuumizing component, a gas charging component, and a detection component, a vacuuming port of the vacuumizing component is communicated with the first mounting cavity, the gas charging component is used for charging the battery with a detection gas, and a detection port of the detection component is communicated with the first mounting cavity, so as to detect whether the detection gas exists in the first mounting cavity.

27. The battery production device according to any one of claims 1 to 26, wherein a heating mechanism for heating the battery is disposed in at least one of the cover body and the first support cup.

28. A battery production apparatus, comprising a first battery production device and a second battery production device, wherein the first battery production device comprises the battery production device according to claim 24, and the second battery production device comprises the battery production device according to claim 22;
the fourth conveying member of the first battery production device is connected to the first conveying member of the second battery production device, so that the first support cup located on the fourth conveying member of the first battery production device is capable of being conveyed to the first conveying member of the second battery production device; and the third conveying member of the first battery production device is connected to the second conveying member of the second battery production device, so that the first support cup located on the second conveying member of the second battery production device is capable of being conveyed to the third conveying member of the first battery production device.

29. The battery production apparatus according to claim 28, wherein the battery production apparatus comprises a plurality of first battery production devices arranged in sequence, and the first conveying members of the first battery production devices are connected in sequence; the third conveying members of the first battery production devices are connected in sequence, and the fourth conveying members of the first battery production devices are connected in sequence; the last fourth conveying member is connected to the first conveying member of the second battery production device; and the last third conveying member is connected to the second conveying member of the second battery production device.

30. The battery production apparatus according to claim 28 or 29, wherein the battery production apparatus further comprises a buffer mechanism, and the buffer mechanism is used for buffering the battery conveyed by the first conveying member of the second battery production device.

31. A battery production method, wherein the battery production method comprises:
battery loading: placing a battery in a first mounting cavity of a first support cup;
battery moving: moving, by a moving mechanism of a battery production device, the first support cup to a first station; and
first mounting cavity sealing: covering the first support cup with a cover body of the battery production device, so as to seal the first mounting cavity.

32. The battery production method according to claim 31, wherein
before the battery loading, the battery is placed in a second support cup, and a first cup changing device moves the battery located in the second support cup to the first mounting cavity of the first support cup,
and/or, after the first mounting cavity sealing, the cover body is separated from the first support cup, and a second cup changing device moves the battery located in the first support cup to a third support cup.

33. The battery production method according to claim 31 or 32, wherein
the moving mechanism comprises a first conveying member, a support platform, and a first pushing member, wherein
the battery moving specifically comprises: conveying, by the first conveying member, the first support cup loaded with the battery to the support platform, and pushing, by the first pushing member, the first support cup to the support platform.

34. The battery production method according to claim 33, wherein the moving mechanism further comprises a second pushing member, a second conveying member, and a first detection mechanism;
after the cover body covers the first support cup, the first detection mechanism detects the battery in the first support cup;
in a case that the first detection mechanism detects that the battery in the first support cup is qualified, after the cover body is separated from the first support cup, the second pushing member pushes the first support cup located on the support platform to the second conveying member; and
in a case that the first detection mechanism detects that the battery in the first support cup is unqualified, after the cover body is separated from the first support cup, the second pushing member pushes the first support cup of the support platform to the first conveying member.

35. The battery production method according to claim 33, wherein the moving mechanism further comprises a third conveying member, a fourth conveying member, and a second detection mechanism;
after the cover body covers the first support cup, the second detection mechanism detects the battery in the first support cup;
in a case that the second detection mechanism detects that the battery in the first support cup is qualified, after the cover body is separated from the first support cup, the first pushing member is used for pushing the first support cup located on the support platform to the third conveying member; and
in a case that the second detection mechanism detects that the battery in the first support cup is unqualified, after the cover body is separated from the first support cup, the first pushing member pushes the first support cup of the support platform to the fourth conveying member.

36. The battery production method according to any one of claims 31 to 35, wherein the battery production device comprises a first battery production device and a second battery production device;
the battery moving specifically comprises: moving, by the moving mechanism of the first battery production device, the first support cup of the first battery production device, to the first station;
the first mounting cavity sealing specifically comprises: covering the first support cup of the first battery production device with the cover body of the first battery production device, so that the first mounting cavity of the first support cup of the first battery production device is sealed;
after the first mounting cavity sealing, detecting, by the first battery production device, the battery loaded in the first support cup of the first battery production device;
in a case that the first battery production device detects that the battery is qualified, after the cover body of the first battery production device is separated from the first support cup of the first battery production device, the first battery production device outputs the first support cup of the first battery production device to a discharging conveying member; and
in a case that the first battery production device detects that the battery is unqualified, after the cover body of the first battery production device is separated from the first support cup of the first battery production device, the first battery production device conveys the first support cup of the first battery production device to the second battery production device; and
re-detecting, by the second battery production device, the battery in the first support cup conveyed by the first battery production device;
in a case that the second battery production device detects that the battery is qualified, the second battery production device conveys the first support cup into the first battery production device and conveys the first support cup to the discharging conveying member via the first battery production device; and
in a case that the second battery production device detects that the battery is unqualified, the second battery production device conveys the first support cup to a defective product conveying member.
